(19) Europäisches Patentamt
European Patent Office
Office européen des brevets

(11) EP 3 645 271 B1

(12) **EUROPEAN PATENT SPECIFICATION**

(45) Date of publication and mention of the grant of the patent:
**26.05.2021 Bulletin 2021/21**

(21) Application number: **18747053.9**

(22) Date of filing: **27.06.2018**

(51) Int Cl.:
***B32B 7/12*** *(2006.01)* ***B32B 27/08*** *(2006.01)*
***B32B 27/20*** *(2006.01)* ***B32B 27/32*** *(2006.01)*
***B32B 27/30*** *(2006.01)*

(86) International application number:
**PCT/US2018/039707**

(87) International publication number:
**WO 2019/005930 (03.01.2019 Gazette 2019/01)**

(54) **POLYETHYLENE LAMINATES FOR USE IN FLEXIBLE PACKAGING MATERIALS**
POLYETHYLENLAMINATE ZUR VERWENDUNG IN FLEXIBLEN VERPACKUNGSMATERIALIEN
POLYÉTHYLÈNE LAMINÉS À UTILISER DANS DES MATÉRIAUX D’EMBALLAGE FLEXIBLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.06.2017 IN 201741023065**

(43) Date of publication of application:
**06.05.2020 Bulletin 2020/19**

(73) Proprietor: **DOW GLOBAL TECHNOLOGIES LLC**
**Midland, MI 48674 (US)**

(72) Inventors:
- **LADDHA, Sachin**
**Vikhroli**
**Mumbai 400 079 (IN)**
- **MISHRA, Shashibhushan**
**Vikhroli**
**Mumbai 40079 (IN)**
- **WANG, Jian**
**Singapore 638025 (SG)**

(74) Representative: **Boult Wade Tennant LLP**
**Salisbury Square House**
**8 Salisbury Square**
**London EC4Y 8AP (GB)**

(56) References cited:
**WO-A1-2018/063693 US-A1- 2015 259 586**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 645 271 B1

## Description

### CROSS REFERENCE TO RELATED APPLICATION

This application claims priority to Indian Patent Application No. 201741023065 filed June 30, 2017, entitled POLYETHYLENE LAMINATES FOR USE IN FLEXIBLE PACKAGING MATERIALS.

### TECHNICAL FIELD

Embodiments described herein relate generally to laminates used in flexible packaging materials, and more particularly to polyethylene laminates used in flexible packaging materials.

### BACKGROUND

Improved recyclability is a continual goal for flexible packaging manufacturers. To achieve this goal, laminates made with monomaterial polymers have been considered, because flexible packaging materials, such as flexible pouches, when made from one polymer family, are more easily recyclable.

Conventional flexible packaging laminates include polymer substrates using multiple polymer families e.g., polyester (PET) as the print film and polyethylene (PE) for the sealant film. For products that may require further enhancement in barrier properties, additional layers of aluminum foil, metallized films, or barrier resins may be included. While not easily recyclable, these conventional PET/PE laminates provide barrier protection from oxygen, light, and moisture to protect the product contained within the flexible packaging, and also provide the shelf life that consumers, retailers and suppliers require

US2015/259586 A1 relates for example to a polyolefin composition suitable for sealant applications, sealant compositions, method of producing the same, and films and multilayer structures made therefrom.

In addition, reducing laminate thickness is a continual goal in flexible packaging; however, there is a tradeoff in strength and barrier properties when reducing the thickness of the laminate. Accordingly, there is a need for monomaterial polyethylene laminates that achieve recyclability and the desired barrier protection and desired printing properties at lower laminate thicknesses.

### SUMMARY

Embodiments of the present disclosure meet those needs and are directed to monomaterial polyethylene laminate structures that achieve desired recyclability, strength, and barrier protection at thicknesses lower than the thicknesses of conventional PET/PE laminates.

According to at least one embodiment of the present disclosure, a laminate structure is provided. The laminate structure comprises a print film comprising ethylene-based polymer, and a sealant film laminated to the print film, wherein the sealant film comprises at least 3 layers and has an overall thickness from 15 to 30 $\mu$m. The sealant film comprises a middle layer, an outer layer, and an inner layer disposed between the print film and the middle layer. The inner layer comprises an ethylene interpolymer having a density from 0.900 to 0.925 g/cc and a melt index ($I_2$) from 0.5 to 5 g/10 min. At least one of the inner layer, the middle layer, and the outer layer comprise a first composition comprising at least one ethylene based polymer, wherein the first composition comprises a Molecular Weighted Comonomer Distribution Index (MWCDI) value greater than 0.9, and a melt index ratio ($I_{10}/I_2$) that meets the following equation: $I_{10}/I_2 \geq 7.0 - 1.2 \times \log (I_2)$.

These and other embodiments are described in more detail in the following Detailed Description.

### BRIEF DESCRIPTION OF THE DRAWINGS

The following detailed description of specific embodiments of the present disclosure can be best understood when read in conjunction with the following drawings, where like structure is indicated with like reference numerals and in which:

Figure 1 depicts the plot of "$SCB_f$ versus IR5 Area Ratio" for ten SCB Standards.

Figure 2 depicts the several GPC profiles for the determination of IR5 Height Ratio for a sample composition.

Figure 3 depicts the plot of "$SCB_f$ versus Polyethylene Equivalent molecular Log $Mw_i$ (GPC)" for a sample composition.

Figure 4 depicts a plot of the "Mole Percent Comonomer versus Polyethylene Equivalent Log $_{Mwi}$ (GPC)" for a sample composition.

## DETAILED DESCRIPTION

Specific embodiments of the present application will now be described. The disclosure may, however, be embodied in different forms and should not be construed as limited to the embodiments set forth in this disclosure. Rather, these embodiments are provided so that this disclosure will be thorough and complete, and will fully convey the scope of the subject matter to those skilled in the art.

The term "polymer" refers to a polymeric compound prepared by polymerizing monomers, whether of the same or a different type. The generic term polymer thus embraces the term "homopolymer", usually employed to refer to polymers prepared from only one type of monomer as well as "copolymer" which refers to polymers prepared from two or more different monomers. The term "interpolymer," as used herein, refers to a polymer prepared by the polymerization of at least two different types of monomers. The generic term interpolymer thus includes copolymers, and polymers prepared from more than two different types of monomers, such as terpolymers.

"Polyethylene" or "ethylene-based polymer" shall mean polymers comprising greater than 50% by weight of units which have been derived from ethylene monomer. This includes polyethylene homopolymers or copolymers (meaning units derived from two or more comonomers). Common forms of polyethylene known in the art include Low Density Polyethylene (LDPE); Linear Low Density Polyethylene (LLDPE); Ultra Low Density Polyethylene (ULDPE); Very Low Density Polyethylene (VLDPE); single-site catalyzed Linear Low Density Polyethylene, including both linear and substantially linear low density resins (m-LLDPE); Medium Density Polyethylene (MDPE); and High Density Polyethylene (HDPE).

The term "propylene-based polymer," as used herein, refers to a polymer that comprises, in polymerized form, a majority amount of propylene monomer (based on the total weight of the polymer) and optionally may comprise at least one polymerized comonomer.

The terms "flexible packaging" or "flexible packaging material" encompass various non-rigid containers familiar to the skilled person. These may include pouches, stand-up pouches, pillow pouches, bulk bags, pre-made packages or the like.

As used herein, the term, "monomaterial" means that the laminate structures are composed substantially of polyethylene, wherein "substantially" means at least 95 wt.% polyethylene, or at least 99 wt.% polyethylene, or at least 99.5 wt. % polyethylene, or at least 99.9 wt.% based on the overall weight of the laminate structure.

As used herein, the "print film" refers to an outer film of the laminate structure which is the film in which printing is performed in the production of flexible packages. The term "outer" is not to be construed as the outermost layer as many embodiments contemplate additional layers externally disposed on the print film, such as print primer layers, barrier layers, overprint varnish layers, or other layers known to the person skilled in the art of flexible packaging.

As used herein, "sealant film" refers to an inner film of the laminate structure disposed internally relative to the print film. The term "inner" is not to be construed as the innermost layer as some embodiments contemplate additional layers internally disposed on the sealant film, for example, barrier layer, etc.

Reference will now be made in detail to various laminate structure embodiments of the present disclosure, specifically, laminate structures used in articles such as flexible packaging materials. In one embodiment, the laminate structure comprises a print film comprising ethylene-based polymer, and a sealant film laminated to the print film. The sealant film comprises at least 3 layers and has an overall thickness from 15 to 30 $\mu$m. The sealant film comprises a middle layer, an outer layer, and an inner layer disposed between the print film and the middle layer. The inner layer of the sealant film comprises an ethylene interpolymer having a density from 0.900 to 0.925 g/cc and a melt index ($I_2$) from 0.5 to 5 g/10 min. At least one of the inner layer, the middle layer, and the outer layer comprise a first composition comprising at least one ethylene based polymer. The first composition comprises a Molecular Weighted Comonomer Distribution Index (MWCDI) value greater than 0.9, and a melt index ratio ($I_{10}/I_2$) that meets the following equation: $I_{10}/I_2 \geq 7.0 - 1.2 \times \log(I_2)$.

## Sealant Film

In one or more embodiments, the middle layer and the outer layer each comprise the first composition. In further embodiments, all three layers - the inner layer, the middle layer, and the outer layer - may include the first composition. Alternatively, only one of the inner layer, the middle layer, and the outer layer may include the first composition in other embodiments. In addition to the first composition, it is contemplated that the inner layer, the middle layer, and/or the outer layer may include additional polymers or additives.

Various properties of the first composition impart improved toughness to the sealant film. For example, the first composition has a superior comonomer distribution, which is significantly higher in comonomer concentration in the high

molecular weight polymer molecules, and is significantly lower in comonomer concentration in the low molecular weight polymer molecules, as compared to conventional polymers of the art at the same overall density. It has also been discovered that the first composition has low LCB (Long Chain Branches), as indicated by low ZSVR, as compared to conventional polymers. As the result of this distribution of the comonomer, as well as the low LCB nature, the first composition has more tie chains, and thus improved film toughness.

The first composition includes an ethylene-based polymer, and in some embodiments, the first composition consists of the ethylene-based polymer. In alternative embodiments, the first composition includes the ethylene-based polymer blended with an additional polymer. For example, and not by way of limitation, this additional polymer is selected from an LLDPE, a VLDPE, an MDPE, an LDPE, an HDPE, an HMWHDPE (a high molecular weight HDPE), a propylene-based polymer, a polyolefin plastomer, a polyolefin elastomer, an olefin block copolymer, an ethylene vinyl acetate, an ethylene acrylic acid, an ethylene methacrylic acid, an ethylene methyl acrylate, an ethylene ethyl acrylate, an ethylene butyl acrylate, an isobutylene, a maleic anhydride-grafted polyolefin, an ionomer of any of the foregoing, or a combination thereof.

As discussed above, the first composition comprises a MWCDI value greater than 0.9. In one embodiment, the first composition has an MWCDI value less than, or equal to, 10.0, further less than, or equal to, 8.0, further less than, or equal to, 6.0. In another embodiment, the first composition has an MWCDI value less than, or equal to, 5.0, further less than, or equal to, 4.0, further less than, or equal to, 3.0. In yet another embodiment, the first composition has an MWCDI value greater than, or equal to, 1.0, further greater than, or equal to, 1.1, further greater than, or equal to, 1.2. In a further embodiment, the first composition has an MWCDI value greater than, or equal to, 1.3, further greater than, or equal to, 1.4, further greater than, or equal to, 1.5.

The first composition has a melt index ratio ($I_{10}/I_2$) that meets the following equation: $I_{10}/I_2 \geq 7.0 - 1.2 \times \log (I_2)$. In yet another embodiment, the first composition has a melt index ratio $I_{10}/I_2$ greater than, or equal to, 7.0, further greater than, or equal to, 7.1, further greater than, or equal to, 7.2, further greater than, or equal to, 7.3. In one embodiment, the first composition has a melt index ratio $I_{10}/I_2$ less than, or equal to, 9.2, further less than, or equal to, 9.0, further less than, or equal to, 8.8, further less than, or equal to, 8.5.

In one embodiment, the first composition has a ZSVR value from 1.2 to 3.0, or from 1.2 to 2.5, or from 1.2 to 2.0.

In yet another embodiment, the first composition has a vinyl unsaturation level greater than 10 vinyls per 1,000,000 total carbons. For example, greater than 20 vinyls per 1,000,000 total carbons, or greater than 50 vinyls per 1,000,000 total carbons, or greater than 70 vinyls per 1,000,000 total carbons, or greater than 100 vinyls per 1,000,000 total carbons. Vinyl unsaturation is calculated using the nuclear magnetic resonance (NMR) spectroscopy defined below.

In one embodiment, the first composition has a density in the range of 0.900 g/cc to 0.960 g/ $cm^3$, or from 0.910 to 0.940 g/$cm^3$, or from 0.910 to 0.930, or from 0.910 to 0.925 g/$cm^3$. For example, the density can be from a lower limit of 0.910, 0.912, or 0.914 g/$cm^3$, to an upper limit of 0.925, 0.927, or 0.930 g/$cm^3$ (1 $cm^3$ = 1 cc).

In a further embodiment, the first composition has a melt index ($I_2$; at 190°C / 2.16 kg) from 0.1 to 50 g/10 minutes, for example from 0.1 to 30 g/10 minutes, or from 0.1 to 20 g/10 minutes, or from 0.1 to 10 g/10 minutes. For example, the melt index ($I_2$; at 190°C / 2.16 kg) can be from a lower limit of 0.1, 0.2, or 0.5 g/10 minutes, to an upper limit of 1.0, 2.0, 3.0, 4.0, 5.0, 10, 15, 20, 25, 30, 40, or 50 g/10 minutes.

In another embodiment, the first composition has a molecular weight distribution, expressed as the ratio of the weight average molecular weight to number average molecular weight ($M_w/M_n$) as determined by conventional Gel Permeation Chromatography (GPC) (conv. GPC) in the range of from 2.2 to 5.0. For example, the molecular weight distribution ($M_w/M_n$) can be from a lower limit of 2.2, 2.3, 2.4, 2.5, 3.0, 3.2, or 3.4, to an upper limit of 3.9, 4.0, 4.1, 4.2, 4.5, or 5.0.

In one embodiment, the first composition has a number average molecular weight ($M_n$) as determined by conv. GPC in the range from 10,000 to 50,000 g/mole. For example, the number average molecular weight can be from a lower limit of 10,000, 20,000, or 25,000 g/mole, to an upper limit of 35,000, 40,000, 45,000, or 50,000 g/mole. In another embodiment, the ethylene-based polymer has a weight average molecular weight ($M_w$) as determined by conv. GPC in the range from 70,000 to 200,000 g/mole. For example, the number average molecular weight can be from a lower limit of 70,000, 75,000, or 78,000 g/mole, to an upper limit of 120,000, 140,000, 160,000, 180,000 or 200,000 g/mole.

In one embodiment, the first composition has a melt viscosity ratio, Eta*0.1 / Eta*100, in the range from 2.2 to 7.0, wherein Eta*0.1 is the dynamic viscosity computed at a shear rate of 0.1 rad/s and Eta*100 is the dynamic viscosity computed at shear rate of 100 rad/s. Further details on the melt viscosity ratio and dynamic viscosity calculations are provided below.

In one embodiment, the ethylene-based polymer of the first composition is an ethylene/a-olefin interpolymer, and further an ethylene/a-olefin copolymer. The $\alpha$-olefin may have less than, or equal to, 20 carbon atoms. For example, the $\alpha$-olefin comonomers may have 3 to 10 carbon atoms, or from 3 to 8 carbon atoms. Exemplary $\alpha$-olefin comonomers include, but are not limited to, propylene, 1-butene, 1-pentene, 1-hexene, 1-heptene, 1-octene, 1-nonene, 1-decene, and 4-methyl-1-pentene. The one or more $\alpha$-olefin comonomers may, for example, be selected from the group consisting of propylene, 1-butene, 1-hexene, and 1-octene; or in the alternative, from the group consisting of 1-butene, 1-hexene

and 1-octene, and further 1-hexene and 1-octene.

The ethylene-based polymers may comprise less than 20 percent by weight of units derived from one or more α-olefin comonomers. All individual values and subranges from less than 18 weight percent are included herein and disclosed herein; for example, the ethylene-based polymers may comprise from less than 15 percent by weight of units derived from one or more α-olefin comonomers; or in the alternative, less than 10 percent by weight of units derived from one or more α-olefin comonomers; or in the alternative, from 1 to 20 percent by weight of units derived from one or more α-olefin comonomers; or in the alternative, from 1 to 10 percent by weight of units derived from one or more α-olefin comonomers.

Conversely, the ethylene-based polymers may comprise at least 80 percent by weight of units derived from ethylene. All individual values and subranges from at least 80 weight percent are included herein and disclosed herein; for example, the ethylene-based polymers may comprise at least 82 percent by weight of units derived from ethylene; or in the alternative, at least 85 percent by weight of units derived from ethylene; or in the alternative, at least 90 percent by weight of units derived from ethylene; or in the alternative, from 80 to 100 percent by weight of units derived from ethylene; or in the alternative, from 90 to 100 percent by weight of units derived from ethylene.

Optionally, the first composition further may comprise a second ethylene-based polymer. In a further embodiment, the second ethylene-based polymer is an ethylene/a-olefin interpolymer, and further an ethylene/α-olefin copolymer, or an LDPE. Suitable α-olefin comonomers are listed above.

In one embodiment, the second ethylene-based polymer is a heterogeneously branched ethylene/α-olefin interpolymer, and further a heterogeneously branched ethylene/α-olefin copolymer. Heterogeneously branched ethylene/a-olefin interpolymers and copolymers are typically produced using Ziegler/Natta type catalyst system, and have more comonomer distributed in the lower molecular weight molecules of the polymer.

In a further embodiment, the second ethylene-based polymer has a molecular weight distribution ($M_w/M_n$) in the range from 3.0 to 5.0, for example from 3.2 to 4.6. For example, the molecular weight distribution ($M_w/M_n$) can be from a lower limit of 3.2, 3.3, 3.5, 3.7, or 3.9, to an upper limit of 4.6, 4.7, 4.8, 4.9, or 5.0.

In yet another embodiment, the first composition further comprises another polymer. In a further embodiment, the polymer is selected from the following: a LLDPE, a MDPE, a LDPE, a HDPE, a propylene-based polymer, or a combination thereof.

In another embodiment, the composition further comprises a LDPE. In a further embodiment, the LDPE is present in an amount from 5 to 50 wt%, further from 10 to 40 wt%, further from 15 to 30 wt%, based on the weight of the composition. In a further embodiment, the LDPE has a density from 0.915 to 0.925 g/cc, and a melt index ($I_2$) from 0.5 to 5 g/10 min, further from 1.0 to 3.0 g/10 min.

In further embodiments, the first composition may comprise one or more additives. Additives include, but are not limited to, antistatic agents, color enhancers, dyes, lubricants, fillers (for example, $TiO_2$ or $CaCO_3$), opacifiers, nucleators, processing aids, pigments, primary anti-oxidants, secondary anti-oxidants, UV stabilizers, anti-block agents, slip agents, tackifiers, fire retardants, anti-microbial agents, odor reducer agents, anti-fungal agents, and combinations thereof.

## Polymerization Process for Making the First Composition

To produce the ethylene based polymer of the first composition, suitable polymerization processes may include, but are not limited to, solution polymerization processes, using one or more conventional reactors, e.g., loop reactors, isothermal reactors, adiabatic reactors, stirred tank reactors, autoclave reactors in parallel, series, and/or any combinations thereof. The ethylene based polymer compositions may, for example, be produced via solution phase polymerization processes, using one or more loop reactors, adiabatic reactors, and combinations thereof.

In general, the solution phase polymerization process occurs in one or more well mixed reactors, such as one or more loop reactors and/or one or more adiabatic reactors at a temperature in the range from 115 to 250°C; for example, from 135 to 200°C, and at pressures in the range of from 300 to 1000 psig, for example, from 450 to 750 psig.

In one embodiment, the ethylene based polymer may be produced in two loop reactors in series configuration, the first reactor temperature is in the range from 115 to 200°C, for example, from 135 to 165°C, and the second reactor temperature is in the range from 150 to 210°C, for example, from 185 to 200°C. In another embodiment, the ethylene based polymer composition may be produced in a single reactor, the reactor temperature is in the range from 115 to 200°C, for example from 130 to 190°C. The residence time in a solution phase polymerization process is typically in the range from 2 to 40 minutes, for example from 5 to 20 minutes. Ethylene, solvent, one or more catalyst systems, optionally one or more cocatalysts, and optionally one or more comonomers, are fed continuously to one or more reactors. Exemplary solvents include, but are not limited to, isoparaffins. For example, such solvents are commercially available under the name ISOPAR E from ExxonMobil Chemical. The resultant mixture of the ethylene based polymer composition and solvent is then removed from the reactor or reactors, and the ethylene based polymer composition is isolated. Solvent is typically recovered via a solvent recovery unit, i.e., heat exchangers and separator vessel, and the solvent is then

recycled back into the polymerization system.

In one embodiment, the ethylene based polymer of the first composition may be produced, via a solution polymerization process, in a dual reactor system, for example a dual loop reactor system, wherein ethylene, and optionally one or more α-olefins, are polymerized in the presence of one or more catalyst systems, in one reactor, to produce a first ethylene-based polymer, and ethylene, and optionally one or more α-olefins, are polymerized in the presence of one or more catalyst systems, in a second reactor, to produce a second ethylene-based polymer. Additionally, one or more cocatalysts may be present.

In another embodiment, the ethylene based polymer may be produced via a solution polymerization process, in a single reactor system, for example, a single loop reactor system, wherein ethylene, and optionally one or more α-olefins, are polymerized in the presence of one or more catalyst systems. Additionally, one or more cocatalysts may be present.

As discussed above, the disclosure provides a process to form a composition comprising at least two ethylene-based polymers, said process comprising the following: polymerizing ethylene, and optionally at least one comonomer, in solution, in the present of a catalyst system comprising a metal-ligand complex of Structure I, to form a first ethylene-based polymer; and polymerizing ethylene, and optionally at least one comonomer, in the presence of a catalyst system comprising a Ziegler/Natta catalyst, to form a second ethylene-based polymer; and wherein Structure I is as follows:

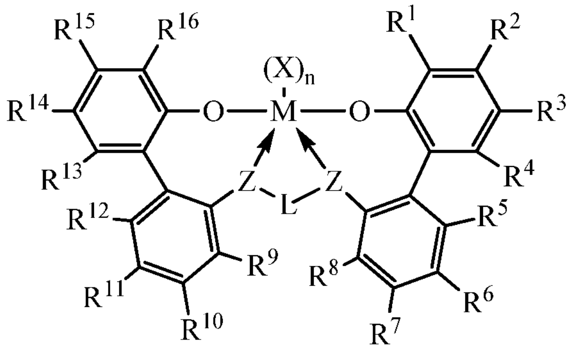

(I),

wherein:

M is titanium, zirconium, or hafnium, each, independently, being in a formal oxidation state of +2, +3, or +4; and

n is an integer from 0 to 3, and wherein when n is 0, X is absent; and

each X, independently, is a monodentate ligand that is neutral, monoanionic, or dianionic; or two Xs are taken together to form a bidentate ligand that is neutral, monoanionic, or dianionic; and

X and n are chosen, in such a way, that the metal-ligand complex of formula (I) is, overall, neutral; and

each Z, independently, is O, S, N($C_1$-$C_{40}$)hydrocarbyl, or P($C_1$-$C_{40}$)hydrocarbyl; and

wherein the Z-L-Z fragment is comprised of formula (1):

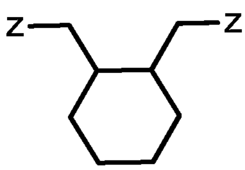

(1);

$R^1$ through $R^{16}$ are each, independently, selected from the group consisting of the following: a substituted or unsubstituted ($C_1$-$C_{40}$)hydrocarbyl, a substituted or unsubstituted ($C_1$-$C_{40}$)heterohydrocarbyl, $Si(R^C)_3$, $Ge(R^C)_3$, $P(R^P)_2$, $N(R^N)_2$, $OR^C$, $SR^C$, $NO_2$, CN, $CF_3$, $R^CS(O)$-, $R^CS(O)_2$-, $(R^C)_2C$=N-, $R^CC(O)O$-, $R^COC(O)$-, $R^CC(O)N(R)$-, $(R^C)_2NC(O)$-, halogen atom, hydrogen atom; and wherein each $R^C$ is independently a ($C_1$-$C_{30}$)hydrocarbyl; $R^P$ is a (C1-C30)hydrocarbyl; and $R^N$ is a (C1-C30)hydrocarbyl; and wherein, optionally, two or more R groups (from $R^1$ through $R^{16}$) can combine together into one or more ring structures, with such ring structures each, independently,

having from 3 to 50 atoms in the ring, excluding any hydrogen atom.

The process may comprise a combination of two or more embodiments as described herein. In one embodiment, the process comprises polymerizing ethylene, and optionally at least one α-olefin, in solution, in the presence of a catalyst system comprising a metal-ligand complex of Structure I, to form a first ethylene-based polymer; and polymerizing ethylene, and optionally at least one α-olefin, in the presence of a catalyst system comprising a Ziegler/Natta catalyst, to form a second ethylene-based polymer. In a further embodiment, each α-olefin is independently a $C_1$-$C_8$ α-olefin.

In one embodiment, optionally, two or more R groups from $R^9$ through $R^{13}$, or $R^4$ through $R^8$ can combine together into one or more ring structures, with such ring structures each, independently, having from 3 to 50 atoms in the ring, excluding any hydrogen atom.

In one embodiment, M is hafnium.

In one embodiment, $R^3$ and $R^{14}$ are each independently an alkyl, and further a $C_1$-$C_3$ alkyl, and further methyl.

In one embodiment, $R^1$ and $R^{16}$ are each as follows:

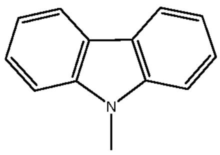

.

In one embodiment, each of the aryl, heteroaryl, hydrocarbyl, heterohydrocarbyl, $Si(R^C)_3$, $Ge(R^C)_3$, $P(R^P)_2$, $N(R^N)_2$, $OR^C$, $SR^C$, $R^CS(O)$-, $R^CS(O)_2$-, $(R^C)_2C$=N-, $R^CC(O)O$-, $R^COC(O)$-, $R^CC(O)N(R)$-, $(R^C)_2NC(O)$-, hydrocarbylene, and heterohydrocarbylene groups, independently, is unsubstituted or substituted with one or more $R^S$ substituents; and each $R^S$ independently is a halogen atom, polyfluoro substitution, perfluoro substitution, unsubstituted ($C_1$-$C_{18}$)alkyl, $F_3C$-, $FCH_2O$-, $F_2HCO$-, $F_3CO$-, $R_3Si$-, $R_3Ge$-, RO-, RS-, RS(O)-, $RS(O)_2$-, $R_2P$-, $R_2N$-, $R_2C$=N-, NC-, RC(O)O-, ROC(O)-, RC(O)N(R)-, or $R_2NC(O)$-, or two of the $R^S$ are taken together to form an unsubstituted ($C_1$-$C_{18}$)alkylene, wherein each R independently is an unsubstituted ($C_1$-$C_{18}$)alkyl.

In one embodiment, two or more of R1 through R16 do not combine to form one or more ring structures.

In one embodiment, the catalyst system suitable for producing the first ethylene/a-olefin interpolymer is a catalyst system comprising bis((2-oxoyl-3-(dibenzo-1H-pyrrole-1-yl)-5-(methyl)phenyl)-2-phenoxymethyl)-methylene-1,2-cyclohexanediylhafnium (IV) dimethyl, represented by the following Structure: IA:

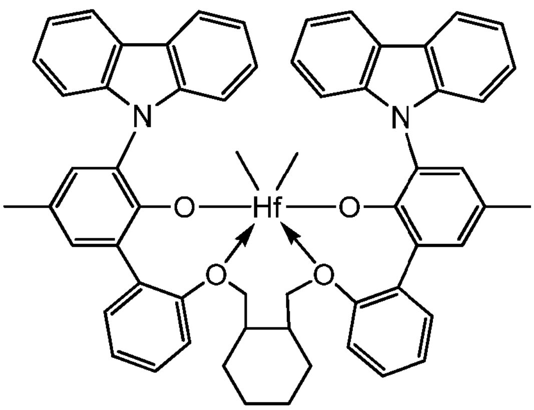

(IA).

The Ziegler/Natta catalysts suitable for use in the invention are typical supported, Ziegler-type catalysts, which are particularly useful at the high polymerization temperatures of the solution process. Examples of such compositions are those derived from organomagnesium compounds, alkyl halides or aluminum halides or hydrogen chloride, and a transition metal compound. Examples of such catalysts are described in U.S. Pat Nos. 4,612,300; 4,314,912; and 4,547,475.

Particularly suitable organomagnesium compounds include, for example, hydrocarbon soluble dihydrocarbylmagnesium, such as the magnesium dialkyls and the magnesium diaryls. Exemplary suitable magnesium dialkyls include, particularly, n-butyl-sec-butylmagnesium, diisopropylmagnesium, di-n-hexylmagnesium, isopropyl-n-butyl-magnesium, ethyl-n-hexyl-magnesium, ethyl-n-butylmagnesium, di-n-octylmagnesium, and others, wherein the alkyl has from 1 to 20 carbon atoms. Exemplary suitable magnesium diaryls include diphenylmagnesium, dibenzylmagnesium and ditolylmagnesium. Suitable organomagnesium compounds include alkyl and aryl magnesium alkoxides and aryloxides and

aryl and alkyl magnesium halides, with the halogen-free organomagnesium compounds being more desirable.

Halide sources include active non-metallic halides, metallic halides, and hydrogen chloride. Suitable non-metallic halides are represented by the formula R'X, wherein R' is hydrogen or an active monovalent organic radical, and X is a halogen. Particularly suitable non-metallic halides include, for example, hydrogen halides and active organic halides, such as t-alkyl halides, allyl halides, benzyl halides and other active hydrocarbyl halides. By an active organic halide is meant a hydrocarbyl halide that contains a labile halogen at least as active, i.e., as easily lost to another compound, as the halogen of sec-butyl chloride, preferably as active as t-butyl chloride. In addition to the organic monohalides, it is understood that organic dihalides, trihalides and other polyhalides that are active, as defined hereinbefore, are also suitably employed. Examples of preferred active non-metallic halides, include hydrogen chloride, hydrogen bromide, t-butyl chloride, t-amyl bromide, allyl chloride, benzyl chloride, crotyl chloride, methylvinyl carbinyl chloride, $\alpha$-phenylethyl bromide, diphenyl methyl chloride, and the like. Most preferred are hydrogen chloride, t-butyl chloride, allyl chloride and benzyl chloride.

Suitable metallic halides include those represented by the formula MRy-a Xa, wherein: M is a metal of Groups IIB, IIIA or IVA of Mendeleev's periodic Table of Elements; R is a monovalent organic radical; X is a halogen; y has a value corresponding to the valence of M; and "a" has a value from 1 to y. Preferred metallic halides are aluminum halides of the formula $AlR_{3-a}\ X_a$, wherein each R is independently hydrocarbyl, such as alkyl; X is a halogen; and a is a number from 1 to 3. Most preferred are alkylaluminum halides, such as ethylaluminum sesquichloride, diethylaluminum chloride, ethylaluminum dichloride, and diethylaluminum bromide, with ethylaluminum dichloride being especially preferred. Alternatively, a metal halide, such as aluminum trichloride, or a combination of aluminum trichloride with an alkyl aluminum halide, or a trialkyl aluminum compound may be suitably employed.

Any of the conventional Ziegler-Natta transition metal compounds can be usefully employed, as the transition metal component in preparing the supported catalyst component. Typically, the transition metal component is a compound of a Group IVB, VB, or VIB metal. The transition metal component is generally, represented by the formulas: $TrX'_{4-q}$ (OR1)q, $TrX'_{4-q}$ (R2)q, $VOX'_3$ and $VO(OR)_3$.

Tr is a Group IVB, VB, or VIB metal, preferably a Group IVB or VB metal, preferably titanium, vanadium or zirconium; q is 0 or a number equal to, or less than, 4; X' is a halogen, and R1 is an alkyl group, aryl group or cycloalkyl group having from 1 to 20 carbon atoms; and R2 is an alkyl group, aryl group, aralkyl group, substituted aralkyls, and the like.

The aryl, aralkyls and substituted aralkys contain 1 to 20 carbon atoms, preferably 1 to 10 carbon atoms. When the transition metal compound contains a hydrocarbyl group, R2, being an alkyl, cycloalkyl, aryl, or aralkyl group, the hydrocarbyl group will preferably not contain an H atom in the position beta to the metal carbon bond. Illustrative, but non-limiting, examples of aralkyl groups are methyl, neopentyl, 2,2-dimethylbutyl, 2,2-dimethylhexyl; aryl groups such as benzyl; cycloalkyl groups such as 1-norbornyl. Mixtures of these transition metal compounds can be employed if desired.

Illustrative examples of the transition metal compounds include $TiCl_4$, $TiBr_4$, $Ti(OC_2H_5)_3Cl$, $Ti(OC_2H_5)Cl_3$, $Ti(OC_4H_9)_3Cl$, $Ti(OC_3H_7)_2Cl_2$, $Ti(OC_6H_{13})_2Cl_2$, $Ti(OC_8H_{17})_2Br_2$, and $Ti(OC_{12}H_{25})Cl_3$, $Ti(O\text{-}iC_3H_7)_4$, and $Ti(O\text{-}nC_4H_9)_4$. Illustrative examples of vanadium compounds include $VCl_4$, $VOCl_3$, $VO(OC_2H_5)_3$, and $VO(OC_4H_9)_3$. Illustrative examples of zirconium compounds include $ZrCl_4$, $ZrCl_3(OC_2H_5)$, $ZrCl_2(OC_2H_5)_2$, $ZrCl(OC_2H_5)_3$, $Zr(OC_2H_5)_4$, $ZrCl_3(OC_4H_9)$, $ZrCl_2(OC_4H_9)_2$, and $ZrCl(OC_4H_9)3$.

An inorganic oxide support may be used in the preparation of the catalyst, and the support may be any particulate oxide, or mixed oxide which has been thermally or chemically dehydrated, such that it is substantially free of adsorbed moisture. See U. S. Pat Nos. 4,612,300; 4,314,912; and 4,547,475.

The above described catalyst systems can be rendered catalytically active by contacting it to, or combining it with, the activating co-catalyst, or by using an activating technique, such as those known in the art, for use with metal-based olefin polymerization reactions. Suitable activating co-catalysts, for use herein, include alkyl aluminums; polymeric or oligomeric alumoxanes (also known as aluminoxanes); neutral Lewis acids; and non-polymeric, non-coordinating, ion-forming compounds (including the use of such compounds under oxidizing conditions). A suitable activating technique is bulk electrolysis. Combinations of one or more of the foregoing activating co-catalysts and techniques are also contemplated. The term "alkyl aluminum" means a monoalkyl aluminum dihydride or monoalkylaluminum dihalide, a dialkyl aluminum hydride or dialkyl aluminum halide, or a trialkylaluminum. Aluminoxanes and their preparations are known at, for example, U.S. Patent 6,103,657. Examples of preferred polymeric or oligomeric alumoxanes are methylalumoxane, triisobutylaluminum-modified methylalumoxane, and isobutylalumoxane.

Exemplary Lewis acid activating co-catalysts are Group 13 metal compounds containing from 1 to 3 hydrocarbyl substituents as described herein. In some embodiments, exemplary Group 13 metal compounds are tri(hydrocarbyl)-substituted-aluminum or tri(hydrocarbyl)-boron compounds. In some other embodiments, exemplary Group 13 metal compounds are tri(hydrocarbyl)-substituted-aluminum or tri(hydrocarbyl)-boron compounds are tri(($C_1$-$C_{10}$)alkyl)aluminum or tri(($C_6$-$C_{18}$)aryl)boron compounds and halogenated (including perhalogenated) derivatives thereof. In some other embodiments, exemplary Group 13 metal compounds are tris(fluoro-substituted phenyl)boranes, in other embodiments,

tris(pentafluorophenyl)borane. In some embodiments, the activating co-catalyst is a tris(($C_1$-$C_{20}$)hydrocarbyl) borate (e.g., trityl tetrafluoroborate) or a tri(($C_1$-$C_{20}$)hydrocarbyl)ammonium tetra(($C_1$-$C_{20}$)hydrocarbyl)borane (e.g., bis(octadecyl)methylammonium tetrakis(pentafluorophenyl)borane). As used herein, the term "ammonium" means a nitrogen cation that is a (($C_1$-$C_{20}$)hydrocarbyl)$_4N^+$, a (($C_1$-$C_{20}$)hydrocarbyl)$_3N(H)^+$, a (($C_1$-$C_{20}$)hydrocarbyl)$_2N(H)_2^+$, ($C_1$-$C_{20}$)hydrocarbyl$N(H)_3^+$, or $N(H)_4^+$, wherein each ($C_1$-$C_{20}$)hydrocarbyl may be the same or different.

Exemplary combinations of neutral Lewis acid activating co-catalysts include mixtures comprising a combination of a tri(($C_1$-$C_4$)alkyl)aluminum and a halogenated tri(($C_6$-$C_{18}$)aryl)boron compound, especially a tris(pentafluorophenyl)borane. Other exemplary embodiments are combinations of such neutral Lewis acid mixtures with a polymeric or oligomeric alumoxane, and combinations of a single neutral Lewis acid, especially tris(pentafluorophenyl)borane with a polymeric or oligomeric alumoxane. Exemplary embodiments ratios of numbers of moles of (metal-ligand complex):(tris(pentafluoro-phenylborane): (alumoxane) [e.g., (Group 4 metal-ligand complex):(tris(pentafluoro-phenylborane):(alumoxane)] are from 1:1:1 to 1:10:30, other exemplary embodiments are from 1:1:1.5 to 1:5:10.

Many activating co-catalysts and activating techniques have been previously taught, with respect to different metal-ligand complexes, in the following USPNs: US 5,064,802; US 5,153,157; US 5,296,433; US 5,321,106; US 5,350,723; US 5,425,872; US 5,625,087; US 5,721,185; US 5,783,512; US 5,883,204; US 5,919,983; US 6,696,379; and US 7,163,907. Examples of suitable hydrocarbyloxides are disclosed in US 5,296,433. Examples of suitable Bronsted acid salts for addition polymerization catalysts are disclosed in US 5,064,802; US 5,919,983; US 5,783,512. Examples of suitable salts of a cationic oxidizing agent and a non-coordinating, compatible anion, as activating co-catalysts for addition polymerization catalysts, are disclosed in US 5,321,106. Examples of suitable carbenium salts as activating co-catalysts for addition polymerization catalysts are disclosed in US 5,350,723. Examples of suitable silylium salts, as activating co-catalysts for addition polymerization catalysts, are disclosed in US 5,625,087. Examples of suitable complexes of alcohols, mercaptans, silanols, and oximes with tris(pentafluorophenyl)borane are disclosed in US 5,296,433. Some of these catalysts are also described in a portion of US 6,515,155 B1, beginning at column 50, at line 39, and going through column 56, at line 55.

In some embodiments, the above described catalyst systems can be activated to form an active catalyst composition by combination with one or more cocatalyst, such as a cation forming cocatalyst, a strong Lewis acid, or a combination thereof. Suitable cocatalysts for use include polymeric or oligomeric aluminoxanes, especially methyl aluminoxane, as well as inert, compatible, noncoordinating, ion forming compounds. Exemplary suitable cocatalysts include, but are not limited to, modified methyl aluminoxane (MMAO), bis(hydrogenated tallow alkyl)methyl, tetrakis(pentafluorophenyl)borate(1-) amine, triethyl aluminum (TEA), and any combinations thereof.

In some embodiments, one or more of the foregoing activating co-catalysts are used in combination with each other. In one embodiment, a combination of a mixture of a tri(($C_1$-$C_4$)hydrocarbyl)aluminum, tri(($C_1$-$C_4$)hydrocarbyl)borane, or an ammonium borate with an oligomeric or polymeric alumoxane compound, can be used.

In addition to or instead of the first composition, the inner layer may comprise an ethylene interpolymer having a density from 0.900 to 0.925 g/cc and a melt index ($I_2$) from 0.5 to 5 g/10 min. In further embodiments, the ethylene interpolymer of the sealant film may have a density from 0.910 to 0.925 g/cc, or from 0.915 to 0.920 g/cc. In other embodiment, the ethylene interpolymer may have a melt index ($I_2$) from 0.5 to 2 g/10 min, or from 0.8 to 1.2 g/10 min. Various commercial products are considered suitable. Suitable commercial examples may include ELITE™ 5400G and ELITE™ 5401G, both of which are available from The Dow Chemical Company (Midland, MI).

Various amounts of the ethylene interpolymer within the inner layer are contemplated. For example, the inner layer may comprise at least 50% by weight of the ethylene interpolymer. In further embodiments, the inner layer may comprise from 50% to 100% by weight, or 60% to 95% by weight, or from 60 to 90 % by weight, or from or 75% to 90% by weight of the ethylene interpolymer.

In further embodiments, the inner layer may comprises low density polyethylene (LDPE) having a density from 0.915 to 0.930 g/cc, a melt index ($I_2$) from 0.5 to 5 g/10 min, and a Molecular Weight Distribution (MWD) from 3 to 10, wherein the MWD is defined as Mw/Mn, wherein Mw is a weight average molecular weight and Mn is a number average molecular weight as measured by Gel Permeation Chromatography (GPC). In one or more embodiments, the inner layer may comprise 5 to 50 % by weight, or from 10 to 40 % by weight, or from 10 to 25% by weight of the LDPE. In one or more embodiments, the LDPE compositions may include antiblock agent, slip agent, or both.

While the above discussion focuses on a 3 layer multilayer sealant film having an overall thickness from 15 to 30 $\mu$m, various additional thickness and layer configurations are also suitable. For example, it is contemplated that the sealant film may include more than 3 layers. Moreover, the sealant film may have an overall thickness from 20 to 30 $\mu$m, or from 20 $\mu$m to 25 $\mu$m. Additionally, the sealant film may be defined by a ratio by layer thickness for the inner layer, middle layer, and outer layer, respectively. Various thickness ratios are contemplated, for example, from 1:1:1 to 1:5:1. In one embodiment, the sealant film may be defined a ratio by layer thickness of 1:2:1 for the inner layer, middle layer, and outer layer, respectively.

As stated above, the sealant films are imparted with improved strength by the first composition. In one embodiment, the sealant film may have a Dart strength of at least 20 grams per micron (g/$\mu$m) when measured according to

ASTM D-1709 Method A. In a further embodiment, the sealant film may have a Dart strength of at least 25 grams per micron (g/$\mu$m) when measured according to ASTM D-1709 Method A.

*Print Film*

The print film may comprise a monolayer or a multilayer ethylene based polymer film. In one or more multilayer embodiments, the print film comprises at least 3 layers, specifically a middle layer, an inner layer disposed between sealant film and the middle layer, and an outer layer.

The middle layer of the print layer may include a polyethylene composition which provides stiffness and resists gelling during the cast film or blown film extrusion processes. In one embodiment, the middle layer comprises at least 90% by wt. high density polyethylene (HDPE) having a density from 0.950 to 0.965 g/cc and a melt index ($I_2$) from 0.1 to 20 g/10 min, wherein $I_2$ is measured according to ASTM D1238 at 190°C and 2.16 kg load.

Various methodologies are contemplated for producing the HDPE, a polyethylene copolymer produced from the polymerization of ethylene and one or more $\alpha$-olefin comonomers in the presence of one or more catalysts, such as a Ziegler-Natta catalyst, a Phillips catalyst, a metallocene catalyst, a post-metallocene catalyst, a constrained geometry complex (CGC) catalyst, or a biphenyl phenol (BPP) complex catalyst. In a specific embodiment, the HDPE of the middle layer of the print film may be produced from metallocene catalysts. The $\alpha$-olefin comonomers may include $C_3$-$C_{12}$ olefin monomers. In one embodiment, the $\alpha$-olefin comonomer in the HDPE is 1-octene.

In further embodiments, the middle layer of the print film may comprise at least 95% by wt. HDPE, or at least 99% by wt. HDPE, or 100% by wt. HDPE. Without being limited by theory, the HDPE in the middle layer provides the print film with the stiffness to with withstand the stretching of the high speed printing processes. Moreover, unlike conventional polyethylene print films, the present print films do not require printing speeds to be reduced to produce the desired printing performance. Additionally, the HDPE of the print film may have a density from 0.955 to 0.965 g/cc, or from 0.960 to 0.965 g/cc. In further embodiments, the melt index ($I_2$) may be from 0.2 to 10.0 g/10 min, or from 0.3 to 5.0 g/10 min, or from 0.5 to 1.0 g/10 min. Various commercial HDPE products are considered suitable, for example, ELITE™ 5960G from The Dow Chemical Company (Midland, MI).

The inner layer and the outer layer provide the aesthetic benefits (e.g., gloss and clarity) to the print film. In one or more embodiments, the inner layer and outer layer may enable the laminate structure to achieve a gloss value of at least 40%, wherein gloss is measured at 45° according to ASTM D2457. The inner layer, and the outer layer may each independently comprise a linear low density polyethylene (LLDPE) having a density from 0.925 to 0.965 g/cc and a melt index ($I_2$) from 0.1 to 20 g/10 min. In some embodiments, the inner layer and the outer layer comprise the same LLDPE component(s) or differing LLDPE component(s).

Like the HDPE, various methodologies are contemplated for producing the LLDPE of the inner and outer layers. LLDPE is a polyethylene copolymer produced from the polymerization of ethylene and one or more $\alpha$-olefin comonomers in the presence of one or more catalysts, such as a Ziegler-Natta catalyst, a metallocene catalyst, a post-metallocene catalyst, or a CGC catalyst.

In other embodiments, the LLDPE of the inner layer, the outer layer, or both of the print film may have a density from 0.930 to 0.950 g/cc, or from 0.930 to 0.940 g/cc. Moreover, the melt index ($I_2$) of the LLDPE may be from 0.2 to 10 g/10 min, or from 0.5 to 1.5 g/10 min.

Moreover, the inner layer, the outer layer, or both of the print film may comprise at least 50% by wt. LLDPE, or at least 60% by wt. LLDPE, or at least 70% by wt. LLDPE, or at least 80% by wt. LLDPE, or at least 90% by wt. LLDPE, or 100% by wt. LLDPE.

Various commercial LLDPE products are considered suitable for the inner and outer layers of the print film. Suitable examples may include DOWLEX™ 2038.68G and DOWLEX™ 2036G, which are commercially available from The Dow Chemical Company (Midland, MI).

In further embodiments, the inner layer, the outer layer, or both of the print film may comprise low density polyethylene (LDPE) having a melt index ($I_2$) from 0.5 to 5 g/10 min, and a Molecular Weight Distribution (MWD) from 3 to 10, wherein the MWD is defined as $M_w/M_n$, wherein $M_w$ is a weight average molecular weight and $M_n$ is a number average molecular weight as measured by Gel Permeation Chromatography (GPC).

In one or more embodiments, the LDPE of the inner layer, the outer layer, or both of the print film may have a density from 0.915 to 0.930 g/cc, or from 0.915 g/cc to 0.925 g/cc. Moreover, the melt index ($I_2$) of the LDPE may be from 1.0 to 5.0 g/10 min, or from 1.0 to 3.0 g/10 min, or from 1.5 to 2.5 g/10 min.

In one or more embodiments, the LDPE compositions may include antiblock agent, slip agent, or both. Various commercial LDPE products are considered suitable for the inner and outer layers of the print film, for example, DOW™ LDPE 310 and DOW™ LDPE 312, both of which are available from The Dow Chemical Company (Midland, MI).

In embodiments wherein the inner layer, the outer layer, or both of the print film comprise LLDPE and LDPE, the inner layer, the outer layer, or both of the print film may include at least 5% by wt. LLDPE. In one embodiment, the inner layer, the outer layer, or both may comprise from 60 to 95% by wt. LLDPE, and 5 to 40% by wt. LDPE. In a further

embodiment, the inner layer, the outer layer, or both of the print film may include from 80 to 95% by wt. LLDPE, and 5 to 20% by wt. LDPE. In yet another embodiment, the inner layer, the outer layer, or both of the print film may include from 90 to 95% by wt. LLDPE, and 5 to 10% by wt. LDPE.

In addition to the components of the print film and sealant film described above, other polymeric additives may be included, such as, ultraviolet light absorbers, antistatic agents, pigments, dyes, nucleating agents, fillers, slip agents, fire retardants, plasticizers, processing aids, lubricants, stabilizers, smoke inhibitors, viscosity control agents and anti-blocking agents. In specific embodiment, slip agents, anti-blocking agents, or both are included with one or more of the polymers of the print film and/or the sealant film.

While the above discussion focuses on a 3 layer multilayer print film having an overall thickness from 15 to 30 μm, various additional thickness and layer configurations are also suitable. For example, it is contemplated that the print film may include more than 3 layers. Moreover, the print film may have an overall thickness less than 25 μm, or 20 μm. The print film may be defined by a ratio by layer thickness for the inner layer, middle layer, and outer layer, respectively. Various ratios are contemplated, for example, from 1:1:1 to 1:5:1. In one embodiment, the print film may be defined a ratio by layer thickness of 1:3:1 for the inner layer, middle layer, and outer layer, respectively.

Moreover, the overall thickness of the laminate structures may be less than 50 μm, or from 36 to 48 μm, or from 40 to 45 μm.

*Methods for Producing the Flexible Package*

Various methodologies are contemplated for producing the print films, and the sealant films. For example, the multilayer print films may prepared by cast film extrusion, or blown film extrusion. Similarly, multilayer sealant films may also be prepared by cast film extrusion, or blown film extrusion.

After the print film has been blown or cast, the print film may undergo a printing process. Various printing processes are considered suitable for the cast or blown print films. These printing processes may include, but are not limited to rotogravure printing, flexographic printing, and offset printing. In specific embodiments, the print films may undergo rotogravure printing. In specific embodiments, the print films are reverse rotogravure printed at the print speeds typically utilized for a convention PET/PE laminate. The tension between rollers in the rotogravure machine may cause overstretching of conventional films leading to poor print registration. Without being bound by theory, the present print films are believed to have the requisite stiffness to prevent overstretching and thereby achieve the desired printing performance. In one or more embodiments, the present print films may stretch less than 2 mm on a rotogravure print machine whereas conventional polyethylene print films which may stretch about 6 mm.

Various methodologies familiar to the person skilled in the art are also considered suitable for laminating the print film and the sealant film to produce the present laminate structures. To adhere the print film and sealant film, solventless adhesives may be utilized for the dry lamination process. Suitable commercial solventless adhesives may include the MOR-FREE™ solventless adhesives from The Dow Chemical Company (Midland, MI).

Alternatively, various additional processes may be used to produce flexible packages from the laminate structures. These may include heat sealing or other processes familiar to the person skilled in the art.

TESTING METHODS

The test methods include the following:

Melt index ($I_2$)

Melt index ($I_2$) was measured in accordance to ASTM D-1238 at 190°C at 2.16 kg. Melt index ($I_{10}$) was measured in accordance to ASTM D-1238 at 190°C at 10 kg. The values are reported in g/10 min, which corresponds to grams eluted per 10 minutes.

Density

Samples for density measurement were prepared according to ASTM D4703 and reported in grams/cubic centimeter (g/cc or g/cm$^3$). Measurements were made within one hour of sample pressing using ASTM D792, Method B.

Dynamic Shear Rheology

Each sample was compression-molded into "3 mm thick x 25 mm diameter" circular plaque, at 177°C, for five minutes, under 10 MPa pressure, in air. The sample was then taken out of the press and placed on a counter top to cool.

Constant temperature, frequency sweep measurements were performed on an ARES strain controlled rheometer (TA Instruments), equipped with 25 mm parallel plates, under a nitrogen purge. For each measurement, the rheometer was thermally equilibrated, for at least 30 minutes, prior to zeroing the gap. The sample disk was placed on the plate, and allowed to melt for five minutes at 190°C. The plates were then closed to 2 mm, the sample trimmed, and then the test was started. The method had an additional five minute delay built in, to allow for temperature equilibrium. The experiments were performed at 190°C, over a frequency range from 0.1 to 100 rad/s, at five points per decade interval. The strain amplitude was constant at 10%. The stress response was analyzed in terms of amplitude and phase, from which the storage modulus (G'), loss modulus (G"), complex modulus (G*), dynamic viscosity ($\eta^*$ or Eta*), and tan $\delta$ (or tan delta) were calculated.

Melt Strength

Melt strength measurements were conducted on a Gottfert Rheotens 71.97 (Göettfert Inc.; Rock Hill, SC) attached to a Gottfert Rheotester 2000 capillary rheometer. A polymer melt was extruded through a capillary die with a flat entrance angle (180 degrees), with a capillary diameter of 2.0 mm, and an aspect ratio (capillary length/capillary diameter) of 15.

After equilibrating the samples at 190°C, for 10 minutes, the piston was run at a constant piston speed of 0.265 mm/second. The standard test temperature was 190°C. The sample (about 20 grams) was drawn uniaxially to a set of accelerating nips, located 100 mm below the die, with an acceleration of 2.4 mm/second$^2$. The tensile force was recorded, as a function of the take-up speed of the nip rolls. Melt strength was reported as the plateau force (cN) before the strand broke. The following conditions were used, in the melt strength measurements: plunger speed = 0.265 mm/second; wheel acceleration = 2.4 mm/s$^2$; capillary diameter = 2.0 mm; capillary length = 30 mm; and barrel diameter = 12 mm.

Conventional Gel Permeation Chromatography (conv. GPC)

A GPC-IR high temperature chromatographic system from PolymerChar (Valencia, Spain), was equipped with a Precision Detectors (Amherst, MA), 2-angle laser light scattering detector Model 2040, an IR5 infra-red detector and a 4-capillary viscometer, both from PolymerChar. Data collection was performed using PolymerChar Instrument Control software and data collection interface. The system was equipped with an on-line, solvent degas device and pumping system from Agilent Technologies (Santa Clara, CA).

Injection temperature was controlled at 150 degrees Celsius. The columns used, were three, 10-micron "Mixed-B" columns from Polymer Laboratories (Shropshire, UK). The solvent used was 1,2,4-trichlorobenzene. The samples were prepared at a concentration of "0.1 grams of polymer in 50 milliliters of solvent." The chromatographic solvent and the sample preparation solvent each contained "200 ppm of butylated hydroxytoluene (BHT)." Both solvent sources were nitrogen sparged. Ethylene-based polymer samples were stirred gently at 160 degrees Celsius for three hours. The injection volume was "200 microliters,' and the flow rate was "1 milliliters/minute." The GPC column set was calibrated by running 21 "narrow molecular weight distribution" polystyrene standards. The molecular weight (MW) of the standards ranges from 580 to 8,400,000 g/mole, and the standards were contained in six "cocktail" mixtures. Each standard mixture had at least a decade of separation between individual molecular weights. The standard mixtures were purchased from Polymer Laboratories. The polystyrene standards were prepared at "0.025 g in 50 mL of solvent" for molecular weights equal to, or greater than, 1,000,000 g/mole, and at "0.050 g in 50 mL of solvent" for molecular weights less than 1,000,000 g/mole.

The polystyrene standards were dissolved at 80°C, with gentle agitation, for 30 minutes. The narrow standards mixtures were run first, and in order of decreasing "highest molecular weight component," to minimize degradation. The polystyrene standard peak molecular weights were converted to polyethylene molecular weight using Equation 1 (as described in Williams and Ward, J. Polym. Sci., Polym. Letters, 6, 621 (1968)):

$$\text{Mpolyethylene} = \text{A x (Mpolystyrene)}^{B} \quad \text{(Eqn. 1)},$$

where M is the molecular weight, A is equal to 0.4316 and B is equal to 1.0.

Number-average molecular weight (Mn(conv gpc)), weight average molecular weight (Mw-conv gpc), and z-average molecular weight (Mz(conv gpc)) were calculated according to Equations 2-4 below.

$$\mathrm{Mn(conv\ gpc)} = \frac{\sum_{i=RV_{integration\ start}}^{i=RV_{integration\ end}} \left(IR_{measurement\ channel_i}\right)}{\sum_{i=RV_{integration\ start}}^{i=RV_{integration\ end}} \left( IR_{measurement\ channel_i} / M_{PE_i} \right)} \quad \text{(Eqn. 2)}$$

$$\mathrm{Mw(conv\ gpc)} = \frac{\sum_{i=RV_{integration\ start}}^{i=RV_{integration\ end}} \left(M_{PE_i}\ IR_{measurement\ channel_i}\right)}{\sum_{i=RV_{integration\ start}}^{i=RV_{integration\ end}} \left(IR_{measurement\ channel_i}\right)} \quad \text{(Eqn. 3)}$$

$$\mathrm{Mz(conv\ gpc)} = \frac{\sum_{i=RV_{integration\ start}}^{i=RV_{integration\ end}} \left({M_{PE_i}}^2\ IR_{measurement\ channel_i}\right)}{\sum_{i=RV_{integration\ start}}^{i=RV_{integration\ end}} \left(M_{PE_i}\ IR_{measurement\ channel_i}\right)} \quad \text{(Eqn. 4)}$$

In Equations 2-4, the RV is column retention volume (linearly-spaced), collected at "1 point per second," the IR is the baseline-subtracted IR detector signal, in Volts, from the IR5 measurement channel of the GPC instrument, and $M_{PE}$ is the polyethylene-equivalent MW determined from Equation 1. Data calculation were performed using "GPC One software (version 2.013H)" from PolymerChar.

Creep Zero Shear Viscosity Measurement Method

Zero-shear viscosities were obtained via creep tests, which were conducted on an AR-G2 stress controlled rheometer (TA Instruments; New Castle, Del), using "25-mm-diameter" parallel plates, at 190°C. The rheometer oven was set to test temperature for at least 30 minutes, prior to zeroing the fixtures. At the testing temperature, a compression molded sample disk was inserted between the plates, and allowed to come to equilibrium for five minutes. The upper plate was then lowered down to 50 μm (instrument setting) above the desired testing gap (1.5 mm). Any superfluous material was trimmed off, and the upper plate was lowered to the desired gap. Measurements were done under nitrogen purging, at a flow rate of 5 L/min. The default creep time was set for two hours. Each sample was compression-molded into a "2 mm thick x 25 mm diameter" circular plaque, at 177°C, for five minutes, under 10 MPa pressure, in air. The sample was then taken out of the press and placed on a counter top to cool.

A constant low shear stress of 20 Pa was applied for all of the samples, to ensure that the steady state shear rate was low enough to be in the Newtonian region. The resulting steady state shear rates were in the range from $10^{-3}$ to $10^{-4}$ $s^{-1}$ for the samples in this study. Steady state was determined by taking a linear regression for all the data, in the last 10% time window of the plot of "log (J(t)) vs. log(t)," where J(t) was creep compliance and t was creep time. If the slope of the linear regression was greater than 0.97, steady state was considered to be reached, then the creep test was stopped. In all cases in this study, the slope meets the criterion within one hour. The steady state shear rate was determined from the slope of the linear regression of all of the data points, in the last 10% time window of the plot of "ε vs. t," where ε was strain. The zero-shear viscosity was determined from the ratio of the applied stress to the steady state shear rate.

In order to determine if the sample was degraded during the creep test, a small amplitude oscillatory shear test was conducted before, and after, the creep test, on the same specimen from 0.1 to 100 rad/s. The complex viscosity values of the two tests were compared. If the difference of the viscosity values, at 0.1 rad/s, was greater than 5%, the sample was considered to have degraded during the creep test, and the result was discarded.

**Zero-Shear Viscosity Ratio** (ZSVR) is defined as the ratio of the zero-shear viscosity (ZSV) of the branched polyethylene material to the ZSV of a linear polyethylene material (see ANTEC proceeding below) at the equivalent weight average molecular weight (Mw(conv gpc)), according to the following Equation 5:

$$ZSVR = \frac{\eta_{0B}}{\eta_{0L}} = \frac{\eta_{0B}}{2.29^{-15} M_{w(conv\cdot gpc)}^{3.65}} \quad \text{(Eqn. 5).}$$

The ZSV value was obtained from creep test, at 190°C, via the method described above. The Mw(conv gpc) value was determined by the conventional GPC method (Equation 3), as discussed above. The correlation between ZSV of linear polyethylene and its Mw(conv gpc) was established based on a series of linear polyethylene reference

materials. A description for the ZSV-Mw relationship can be found in the ANTEC proceeding: Karjala et al., Detection of Low Levels of Long-chain Branching in Polyolefins, Annual Technical Conference - Society of Plastics Engineers (2008), 66th 887-891.

## $^1$H NMR Method

A stock solution (3.26 g) was added to "0.133 g of the polymer sample" in 10 mm NMR tube. The stock solution was a mixture of tetrachloroethane-$d_2$ (TCE) and perchloroethylene (50:50, w:w) with 0.001M $Cr^{3+}$. The solution in the tube was purged with $N_2$, for 5 minutes, to reduce the amount of oxygen. The capped sample tube was left at room temperature, overnight, to swell the polymer sample. The sample was dissolved at 110°C with periodic vortex mixing. The samples were free of the additives that may contribute to unsaturation, for example, slip agents such as erucamide. Each $^1$H NMR analysis was run with a 10 mm cryoprobe, at 120°C, on Bruker AVANCE 400 MHz spectrometer.

Two experiments were run to get the unsaturation: the control and the double presaturation experiments. For the control experiment, the data was processed with an exponential window function with LB=1 Hz, and the baseline was corrected from 7 to -2 ppm. The signal from residual $^1$H of TCE was set to 100, and the integral $I_{total}$ from -0.5 to 3 ppm was used as the signal from whole polymer in the control experiment. The "number of $CH_2$ group, $NCH_2$," in the polymer was calculated as follows in Equation 1A:

$$NCH_2 = I_{total}/2 \quad \text{(Eqn. 1A).}$$

For the double presaturation experiment, the data was processed with an exponential window function with LB=1 Hz, and the baseline was corrected from about 6.6 to 4.5 ppm. The signal from residual $^1$H of TCE was set to 100, and the corresponding integrals for unsaturations ($I_{vinylene}$, $I_{trisubstituted}$, $I_{vinyl}$ and $I_{vinylidene}$) were integrated. It is well known to use NMR spectroscopic methods for determining polyethylene unsaturation, for example, see Busico, V., et al., Macromolecules, 2005, 38, 6988. The number of unsaturation unit for vinylene, trisubstituted, vinyl and vinylidene were calculated as follows:

$$N_{vinylene} = I_{vinylene}/2 \qquad \text{(Eqn. 2A),}$$

$$N_{trisubstituted} = I_{trisubstitute} \quad \text{(Eqn. 3A),}$$

$$N_{vinyl} = I_{vinyl}/2 \qquad \text{(Eqn. 4A),}$$

$$N_{vinylidene} = I_{vinylidene}/2 \quad \text{(Eqn. 5A).}$$

The unsaturation units per 1,000 carbons, all polymer carbons including backbone carbons and branch carbons, were calculated as follows:

$$N_{vinylene}/1{,}000C = (N_{vinylene}/NCH_2)*1{,}000 \qquad \text{(Eqn. 6A),}$$

$$N_{trisubstituted}/1{,}000C = (N_{trisubstituted}/NCH_2)*1{,}000 \qquad \text{(Eqn. 7A),}$$

$$N_{vinyl}/1{,}000C = (N_{vinyl}/NCH_2)*1{,}000 \qquad \text{(Eqn. 8A),}$$

$$N_{vinylidene}/1{,}000C = (N_{vinylidene}/NCH_2)*1{,}000 \text{(Eqn. 9A),}$$

The chemical shift reference was set at 6.0 ppm for the $^1$H signal from residual proton from TCE-d2. The control was run with ZG pulse, NS=4, DS=12, SWH=10,000 Hz, AQ=1.64s, D1=14s. The double presaturation experiment was

run with a modified pulse sequence, with O1P = 1.354 ppm, O2P = 0.960 ppm, PL9 = 57db, PL21 = 70 db, NS = 100, DS = 4, SWH = 10,000 Hz, AQ = 1.64s, D1 = 1 s (where D1 is the presaturation time), D13 = 13s. Only the vinyl levels were reported in Table 2 below.

$^{13}C$ NMR Method

Samples are prepared by adding approximately 3g of a 50/50 mixture of tetrachloroethane-d2/orthodichlorobenzene, containing 0.025 M $Cr(AcAc)_3$, to a "0.25 g polymer sample" in a 10 mm NMR tube. Oxygen is removed from the sample by purging the tube headspace with nitrogen. The samples are then dissolved, and homogenized, by heating the tube and its contents to 150°C, using a heating block and heat gun. Each dissolved sample is visually inspected to ensure homogeneity.

All data are collected using a Bruker 400 MHz spectrometer. The data is acquired using a 6 second pulse repetition delay, 90-degree flip angles, and inverse gated decoupling with a sample temperature of 120°C. All measurements are made on non-spinning samples in locked mode. Samples are allowed to thermally equilibrate for 7 minutes prior to data acquisition. The 13C NMR chemical shifts were internally referenced to the EEE triad at 30.0 ppm.

C13 NMR Comonomer Content: It is well known to use NMR spectroscopic methods for determining polymer composition. ASTM D 5017-96; J. C. Randall et al., in "NMR and Macromolecules" ACS Symposium series 247; J. C. Randall, Ed., Am. Chem. Soc., Washington, D.C., 1984, Ch. 9; and J. C. Randall in "Polymer Sequence Determination", Academic Press, New York (1977) provide general methods of polymer analysis by NMR spectroscopy.

Molecular Weighted Comonomer Distribution Index (MWCDI)

A GPC-IR, high temperature chromatographic system from PolymerChar (Valencia, Spain) was equipped with a Precision Detectors' (Amherst, MA) 2-angle laser light scattering detector Model 2040, and an IR5 infra-red detector (GPC-IR) and a 4-capillary viscometer, both from PolymerChar. The "15-degree angle" of the light scattering detector was used for calculation purposes. Data collection was performed using PolymerChar Instrument Control software and data collection interface. The system was equipped with an on-line, solvent degas device and pumping system from Agilent Technologies (Santa Clara, CA).

Injection temperature was controlled at 150 degrees Celsius. The columns used, were four, 20-micron "Mixed-A" light scattering columns from Polymer Laboratories (Shropshire, UK). The solvent was 1,2,4-trichlorobenzene. The samples were prepared at a concentration of "0.1 grams of polymer in 50 milliliters of solvent." The chromatographic solvent and the sample preparation solvent each contained "200 ppm of butylated hydroxytoluene (BHT)." Both solvent sources were nitrogen sparged. Ethylene-based polymer samples were stirred gently, at 160 degrees Celsius, for three hours. The injection volume was "200 microliters," and the flow rate was "1 milliliters/minute."

Calibration of the GPC column set was performed with 21 "narrow molecular weight distribution" polystyrene standards, with molecular weights ranging from 580 to 8,400,000 g/mole. These standards were arranged in six "cocktail" mixtures, with at least a decade of separation between individual molecular weights. The standards were purchased from Polymer Laboratories (Shropshire UK). The polystyrene standards were prepared at "0.025 grams in 50 milliliters of solvent" for molecular weights equal to, or greater than, 1,000,000 g/mole, and at "0.050 grams in 50 milliliters of solvent" for molecular weights less than 1,000,000 g/mole. The polystyrene standards were dissolved at 80 degrees Celsius, with gentle agitation, for 30 minutes. The narrow standards mixtures were run first, and in order of decreasing "highest molecular weight component," to minimize degradation. The polystyrene standard peak molecular weights were converted to polyethylene molecular weights using Equation 1B (as described in Williams and Ward, J. Polym. Sci., Polym. Let., 6, 621 (1968)):

$$\text{Mpolyethylene} = \text{A x (Mpolystyrene)}^{\text{B}} \quad \text{(Eqn. 1B)},$$

where M is the molecular weight, A has a value of approximately 0.40 and B is equal to 1.0. The A value was adjusted between 0.385 and 0.425 (depending upon specific column-set efficiency), such that NBS 1475A (NIST) linear polyethylene weight-average molecular weight corresponded to 52,000 g/mole, as calculated by Equation 3B, below:

$$\text{Mn(LALS gpc)} = \frac{\sum_{i=RV_{integration\ start}}^{i=RV_{integration\ end}} (IR_{measurement\ channel_i})}{\sum_{i=RV_{integration\ start}}^{i=RV_{integration\ end}} \left( IR_{measurement\ channel_i} / M_{PE_i} \right)} \quad \text{(Eqn. 2B)}$$

$$\mathrm{Mw(LALS\ gpc)} = \frac{\sum_{i=RV_{integration\ start}}^{i=RV_{integration\ end}} (M_{PE_i}\ IR_{measurement\ channel_i})}{\sum_{i=RV_{integration\ start}}^{i=RV_{integration\ end}} (IR_{measurement\ channel_i})} \quad \text{(Eqn. 3B)}$$

In Equations 2B and 3B, RV is column retention volume (linearly-spaced), collected at "1 point per second." The IR is the baseline-subtracted IR detector signal, in Volts, from the measurement channel of the GPC instrument, and the $M_{PE}$ is the polyethylene-equivalent MW determined from Equation 1B. Data calculation were performed using "GPC One software (version 2.013H)" from PolymerChar.

A calibration for the IR5 detector ratios was performed using at least ten ethylene-based polymer standards (polyethylene homopolymer and ethylene/octene copolymers; narrow molecular weight distribution and homogeneous comonomer distribution) of known short chain branching (SCB) frequency (measured by the $^{13}$C NMR Method, as discussed above), ranging from homopolymer (0 SCB/1000 total C) to approximately 50 SCB/1000 total C, where total C = carbons in backbone + carbons in branches. Each standard had a weight-average molecular weight from 36,000 g/mole to 126,000 g/mole, as determined by the GPC-LALS processing method described above. Each standard had a molecular weight distribution (Mw/Mn) from 2.0 to 2.5, as determined by the GPC-LALS processing method described above. Polymer properties for the SCB standards are shown in Table 1.

Table 1: "SCB" Standards

| Wt % Comonomer | IR5 Area ratio | SCB/1000 Total C | Mw | Mw/Mn |
|---|---|---|---|---|
| 23.1 | 0.2411 | 28.9 | 37,300 | 2.22 |
| 14.0 | 0.2152 | 17.5 | 36,000 | 2.19 |
| 0.0 | 0.1809 | 0.0 | 38,400 | 2.20 |
| 35.9 | 0.2708 | 44.9 | 42,200 | 2.18 |
| 5.4 | 0.1959 | 6.8 | 37,400 | 2.16 |
| 8.6 | 0.2043 | 10.8 | 36,800 | 2.20 |
| 39.2 | 0.2770 | 49.0 | 125,600 | 2.22 |
| 1.1 | 0.1810 | 1.4 | 107,000 | 2.09 |
| 14.3 | 0.2161 | 17.9 | 103,600 | 2.20 |
| 9.4 | 0.2031 | 11.8 | 103,200 | 2.26 |

The "IR5 Area Ratio (or "IR5 $_{\text{Methyl Channel Area}}$ / IR5 $_{\text{Measurement Channel Area}}$")" of "the baseline-subtracted area response of the IR5 methyl channel sensor" to "the baseline-subtracted area response of IR5 measurement channel sensor" (standard filters and filter wheel as supplied by PolymerChar: Part Number IR5_FWM01 included as part of the GPC-IR instrument) was calculated for each of the "SCB" standards. A linear fit of the SCB frequency versus the "IR5 Area Ratio" was constructed in the form of the following Equation 4B:

$$\text{SCB/1000 total C} = A_0 + [A_1 \text{ x } (\text{IR5}_{\text{ Methyl Channel Area}} / \text{IR5}_{\text{ Measurement Channel Area}})] \qquad \text{(Eqn. 4B)},$$

where $A_0$ is the "SCB/1000 total C" intercept at an "IR5 Area Ratio" of zero, and $A_1$

where $A_0$ is the "SCB/1000 total C" intercept at an "IR5 Area Ratio" of zero, and $A_1$ is the slope of the "SCB/1000 total C" versus "IR5 Area Ratio," and represents the increase in the "SCB/1000 total C" as a function of "IR5 Area Ratio."

A series of "linear baseline-subtracted chromatographic heights" for the chromatogram generated by the "IR5 methyl channel sensor" was established as a function of column elution volume, to generate a baseline-corrected chromatogram (methyl channel). A series of "linear baseline-subtracted chromatographic heights" for the chromatogram generated by the "IR5 measurement channel" was established as a function of column elution volume, to generate a base-line-corrected chromatogram (measurement channel).

The "IR5 Height Ratio" of "the baseline-corrected chromatogram (methyl channel)" to "the baseline-corrected chromatogram (measurement channel)" was calculated at each column elution volume index (each equally-spaced index, representing 1 data point per second at 1 ml/min elution) across the sample integration bounds. The "IR5 Height

Ratio" was multiplied by the coefficient $A_1$, and the coefficient $A_0$ was added to this result, to produce the predicted SCB frequency of the sample. The result was converted into mole percent comonomer, as follows in Equation 5B:

comonomer) / 2)]} * 100 (Eqn. 5B),

where “$SCB_f$” is the “SCB per 1000 total C” and the

where "$SCB_f$" is the "SCB per 1000 total C" and the "Length of comonomer" = 8 for octene, 6 for hexene, and so forth.

Each elution volume index was converted to a molecular weight value ($Mw_i$) using the method of Williams and Ward (described above; Eqn. 1B). The "Mole Percent Comonomer *(y axis)"* was plotted as a function of Log($Mw_i$), and the slope was calculated between $Mw_i$ of 15,000 and $Mw_i$ of 150,000 g/mole (end group corrections on chain ends were omitted for this calculation). An EXCEL linear regression was used to calculate the slope between, and including, Mwi from 15,000 to 150,000 g/mole. This slope is defined as the molecular weighted comonomer distribution index (MWCDI = Molecular Weighted Comonomer Distribution Index).

Representative Determination of MWCDI

To illustrate determination of MWCDI, a representative determination of MWCDI is provided for a sample composition. A plot of the measured "SCB per 1000 total C (= $SCB_f$)" versus the observed "IR5 Area Ratio" of the SCB standards was generated (*see* Figure 1), and the intercept ($A_0$) and slope ($A_1$) were determined. Here, $A_0$ = -90.246 SCB/1000 total C; and $A_1$ = 499.32 SCB/1000 total C.

The "IR5 Height Ratio" was determined for the sample composition (see integration shown in Figure 2). This height ratio (IR5 Height Ratio of sample composition) was multiplied by the coefficient $A_1$, and the coefficient $A_0$ was added to this result, to produce the predicted SCB frequency of this example, at each elution volume index, as described above ($A_0$ = -90.246 SCB/1000 total C; and $A_1$ = 499.32 SCB/1000 total C). The $SCB_f$ was plotted as a function of polyethylene-equivalent molecular weight, as determined using Equation 1B, as discussed above. *See* Figure 3 (Log Mwi used as the x-axis).

The $SCB_f$ was converted into "Mole Percent Comonomer" via Equation 5B. The "Mole Percent Comonomer" was plotted as a function of polyethylene-equivalent molecular weight, as determined using Equation 1B, as discussed above. *See* Figure 4 (Log Mwi used as the x-axis). A linear fit was from Mwi of 15,000 g/mole to Mwi of 150,000 g/mole, yielding a slope of "2.27 mole percent comonomer x mole/g." Thus, the MWCDI = 2.27. An EXCEL linear regression was used to calculate the slope between, and including, Mwi from 15,000 to 150,000 g/mole.

Dart Drop Impact Test

Falling dart impact strengths were evaluated using an impact tester with fixed weights according to the ASTM D-1709 method A. The drop dart impact test is used in determining impact strength. A weighted round-headed dart is dropped onto a tightly clamped sheet of film, and the sample is examined for failures (tears or holes in the film). Enough drops of varying weights are made to determine the weight in grams for a 50 percent failure point. Test method A specifies a dart with a 38 mm (1.5") diameter dropped from 0.66 m (26")

EXAMPLES

The following examples illustrate features of the present disclosure but are not intended to limit the scope of the disclosure.

Laminate Polymers and Additives

The following resins were used in the laminates.

ELITE™ 5401G is an enhanced polyethylene resin produced from INSITE™ technology from The Dow Chemical Company. ELITE™ 5401G has a melt index ($I_2$) of 1.00 g/10 min when measured according to ASTM D 1238 at a load of 2.16 kg and temperature of 190°C, and a density of 0.918 g/cm$^3$. ELITE™ 5401G, which is commercially available from The Dow Chemical Company (Midland, MI), also includes 2500 ppm of antiblock additive and 1000 ppm of slip additive.

ELITE™ 5960G is a high density, enhanced polyethylene resin having a melt index ($I_2$) of 0.85 g/10 min when measured according to ASTM D 1238 at a load of 2.16 kg and temperature of 190°C, and a density of 0.962 g/cm$^3$. ELITE™ 5960G, which is commercially available from The Dow Chemical Company (Midland, MI), also includes 3000

ppm of antiblock additive.

DOWLEX™ 2038.68G, which is commercially available from The Dow Chemical Company (Midland, MI), is a linear low density polyethylene resin having a melt index ($I_2$) of 1.0 g/10 min when measured according to ASTM D 1238 at a load of 2.16 kg and temperature of 190°C, and a density of 0.935 g/cm$^3$.

DOWLEX™ 2645, which is commercially available from The Dow Chemical Company (Midland, MI), is a linear low density polyethylene resin having a melt index ($I_2$) of 0.85 g/10 min when measured according to ASTM D 1238 at a load of 2.16 kg and temperature of 190°C, and a density of 0.918 g/cm$^3$.

DOW™ LDPE 310E, which is commercially available from The Dow Chemical Company (Midland, MI), is a low density polyethylene resin having a melt index ($I_2$) of 0.75 g/10 min when measured according to ASTM D 1238 at a load of 2.16 kg and temperature of 190°C, and a density of 0. 923 g/cm$^3$. DOW™ LDPE 310E includes no antiblock agent or slip agent.

DOW™ LDPE 312E, which is commercially available from The Dow Chemical Company (Midland, MI), is a low density polyethylene resin having a melt index ($I_2$) of 0.75 g/10 min when measured according to ASTM D 1238 at a load of 2.16 kg and temperature of 190°C, and a density of 0.923 g/cm$^3$. DOW™ LDPE 312E includes 900 ppm of antiblock agent and 385 ppm of slip agent.

First Composition 1, which comprises at least one ethylene-based polymer, has a MWCDI value greater than 0.9, and a melt index ratio ($I_{10}/I_2$) that meets the following equation: 110/12 ≥ 7.0 - 1.2 x log ($I_2$). First Composition 1 contains two ethylene-octene copolymers. Each composition was prepared, via solution polymerization, in a dual series loop reactor system according to U.S. Pat. No. 5,977,251 (*see* Figure 2 of this patent), in the presence of a first catalyst system, as described below, in the first reactor, and a second catalyst system, as described below, in the second reactor.

The first catalyst system comprised a bis((2-oxoyl-3-(dibenzo-1H-pyrrole-1-yl)-5-(methyl)phenyl)-2-phenoxymethyl)-methylene-1,2-cyclohexanediylhafnium (IV) dimethyl, represented by the following formula (CAT 1):

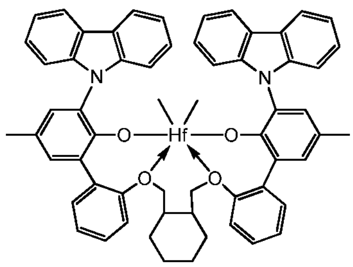

(CAT 1).

The molar ratios of the metal of CAT 1, added to the polymerization reactor, in-situ, to that of Cocat1 (bis(hydrogenated tallow alkyl)methyl,tetrakis(pentafluorophenyl)borate(1-) amine), or Cocat2 (modified methyl aluminoxane (MMAO)), are shown in Table 2.

The second catalyst system comprised a Ziegler-Natta type catalyst (CAT 2). The heterogeneous Ziegler-Natta type catalyst-premix was prepared substantially according to U.S. Pat. No. 4,612,300, by sequentially adding to a volume of ISOPAR E, a slurry of anhydrous magnesium chloride in ISOPAR E, a solution of $EtAlCl_2$ in heptane, and a solution of $Ti(O\text{-}iPr)_4$ in heptane, to yield a composition containing a magnesium concentration of 0.20M, and a ratio of Mg/Al/Ti of 40/12.5/3. An aliquot of this composition was further diluted with ISOPAR-E to yield a final concentration of 500 ppm Ti in the slurry. While being fed to, and prior to entry into, the polymerization reactor, the catalyst premix was contacted with a dilute solution of $Et_3Al$, in the molar Al to Ti ratio specified in Table 2, to give the active catalyst.

The polymerization conditions for First Composition 1 is reported in Table 2. As seen in Table 2, Cocat. 1 (bis(hydrogenated tallow alkyl)methyl,tetrakis(pentafluorophenyl)borate(1-) amine); and Cocat. 2 (modified methyl aluminoxane (MMAO)) were each used as a cocatalyst for CAT 1. Additional properties of the First Composition 1 is measured, and reported in Table 3. The First Composition 1 was stabilized with minor (ppm) amounts of stabilizers.

Table 2: Polymerization Conditions (Rx1 = reactor 1; Rx2 = reactor 2)

| Operating Conditions | Units | First Composition 1 |
|---|---|---|
| Reactor Configuration | Type | Dual Series |
| Comonomer type | Type | 1-octene |
| First Reactor Feed Solvent / Ethylene Mass Flow Ratio | g/g | 4.0 |
| First Reactor Feed Comonomer / Ethylene Mass Flow Ratio | g/g | 0.47 |
| First Reactor Feed Hydrogen / Ethylene Mass Flow Ratio | g/g | 3.0E-04 |

(continued)

| Operating Conditions | Units | First Composition 1 |
|---|---|---|
| First Reactor Temperature | °C | 165 |
| First Reactor Pressure | barg | 50 |
| First Reactor Ethylene Conversion | % | 83.2 |
| First Reactor Catalyst Type | Type | CAT 1 |
| First Reactor Co-Catalyst1 Type | Type | Cocat. 1 |
| First Reactor Co-Catalyst2 Type | Type | Cocat. 2 |
| First Reactor Co-Catalyst1 to Catalyst Molar Ratio (B to Hf ratio) | Ratio | 1.2 |
| First Reactor Co-Catalyst2 Scavenger Molar Ratio (Al to Hf ratio) | Ratio | 30.1 |
| First Reactor Residence Time | min | 10.2 |
| Second Reactor Feed Solvent / Ethylene Mass Flow Ratio | g/g | 2.1 |
| Second Reactor Feed Comonomer / Ethylene Mass Flow Ratio | g/g | 0.112 |
| Second Reactor Feed Hydrogen / Ethylene Mass Flow Ratio | g/g | 9.6E-06 |
| Second Reactor Temperature | °C | 195 |
| Second Reactor Pressure | barg | 51 |
| Second Reactor Ethylene Conversion | % | 83.3 |
| Second Reactor Catalyst Type | Type | CAT 2 |
| Second Reactor Co-Catalyst Type | Type | $Et_3Al$ |
| Second Reactor Co-Catalyst to Catalyst Molar Ratio (Al to Ti ratio) | Ratio | 4.0 |
| Second Reactor Residence Time | min | 7.4 |
| *solvent = ISOPAR E | | |

Table 3: Properties of First Composition 1

| Properties | Unit | First Composition 1 |
|---|---|---|
| Density | g/cc | 0.9117 |
| $I_2$ | g/10 min | 0.86 |
| $I_{10}/I_2$ | | 8.14 |
| 7.0 - 1.2xlog(I2) | | 7.08 |
| Mn (conv.gpc) | g/mol | 30,406 |
| Mw (conv.gpc) | | 115,271 |
| Mz (conv.gpc) | | 273,416 |
| Mw/Mn (conv.gpc) | | 3.79 |
| Mz/Mw (conv.gpc) | | 2.37 |
| Eta* (0.1 rad/s) | Pa•s | 11,139 |
| Eta* (1.0 rad/s) | Pa•s | 8,215 |
| Eta* (10 rad/s) | Pa•s | 4,704 |
| Eta* (100 rad/s) | Pa•s | 1,715 |
| Eta*0.1/ Eta*100 | | 6.5 |

(continued)

| Properties | Unit | First Composition 1 |
|---|---|---|
| Eta zero | Pa•s | 13568 |
| MWCDI | | 2.86 |
| Vinyls | Per 1000 total Carbons | Not Measured |
| ZSVR | | 2.0 |

In the following experiment, a laminate structure (Example 1) in accordance with the present disclosure was compared with a conventional PET/PE laminate having a conventional PE sealant film and a conventional PET print film (Comparative Example 1). Table 4, as follows, lists the compositions of these laminate structures studied herein.

Table 4 - Laminate Structures

| | Comparative Example 1 | Example 1 |
|---|---|---|
| **Structure and Thickness** | Blown Sealant Film - 38 μm,<br>Blown Print Film - 12 μm | Blown Sealant Film - 22 μm,<br>Blown Print Film - 22 μm |
| **Layer Thickness Ratio for Print Film** | 1:3:1 | 1:3:1 |
| **Layer Thickness Ratio for Sealant Film** | 1:2:1 | 1:2:1 |
| **Print Film** | | |
| Inner Layer | The PET print film is a biaxially oriented monolayer film having a thickness of 12 microns. | DOWLEX™ 2038.68G - 90 wt.%<br>DOW™ LDPE 312E - 10 wt. % |
| Middle Layer | | ELITE™ 5960G - 100 wt.% |
| Outer Layer | | DOWLEX™ 2038.68G - 90 wt.%<br>DOW™ LDPE 310E- 10 wt. % |
| **Sealant Film** | | |
| Inner Layer | DOWLEX™ 2645- 80%<br>DOW™ LDPE 312E - 80% | ELITE™ 5401G - 80%<br>DOW™ LDPE 312E - 20% |
| Middle Layer | DOWLEX™ 2645- 80%<br>DOW™ LDPE 310E - 20% | First Composition 1 - 100 wt. % |
| Outer Layer | DOWLEX™ 2645- 80% | First Composition 1 - 100 wt. % |
| | DOW™ LDPE 310E - 20% | |

Blown Film Synthesis

The blown film extrusion processes used to make the blown sealant films and blown print films of Table 4 were conducted on a Windmöller & Holscher (Germany) blown film line. The blown film line had the following properties as listed in Table 5 as follows.

Table 5- Parameters of the Blown Film Line

| Blown Film Line Parameters | |
|---|---|
| Die diameter | 48.5 mm |

(continued)

| Blown Film Line Parameters | |
|---|---|
| Die gap | 2.2 mm |
| (BUR) | 2.5 |
| Bubble cooling | IBC |
| Output | 700 kg/hr (Actual running) |
| Lay Flat width | 980 mm |
| Corona Treatment | Yes |

Table 6 lists the temperature profile of the blown film line i.e., the temperatures at different locations of the blown film line.

Table 6- Temperature Profile (°C)

| Layer | Extruder Zone 1 | Extruder Zone 2 | Extruder Zone 3 | Extruder Zone 4 | Extruder Zone 5 | Extruder Zone 6 | Post Extruder Zone 7 | Post Extruder Zone 8 |
|---|---|---|---|---|---|---|---|---|
| Outer Layer | 185 | 190 | 195 | 200 | 205 | 205 | | |
| Middle layer | 195 | 200 | 205 | 210 | 215 | 215 | | |
| Inner Layer | 185 | 190 | 195 | 200 | 205 | 205 | | |
| Die | 190 | 195 | 200 | 205 | 210 | 215 | 215 | 215 |

Lamination Process

After rotogravure printing on a Rotomac 8 rotogravure color printing machine at a speed of 250 meters/min, the reverse printed print film and the sealant film were laminated using a solventless adhesive system from Henkel Corporation. Lamination was done on a Nordmeccanica solventless laminator at a running speed of 250 meters/min.

Fabrication of Flexible Pouch

The Vertical Form Fill Sealing (VFFS) machine used for producing the flexible pouch was a Poly Heat Seal (PHS) machine from Bosch. The operating parameters are provided in Table 7 as follows.

Table 7 - VFFS operating parameters

| PHS Parameters | |
|---|---|
| Longitudinal jaw set temperature | 160 °C |
| Seal thickness | 3 mm |
| Cooling air | ambient temperature |
| Air pressure | 6 bars |

Experimental Results

In the present experiments, tests were conducted on the sealant films of Example 1 and Comparative Example 1, the laminates of Example 1 and Comparative Example 1, and the pouches produced from the laminates of Example 1 and Comparative Example 1. The sealant film and laminates underwent Dart impact testing, and the pouches were tested with a drop test. Specifically, the pouches of Example 1 and Comparative Example 1 were filed with 1 kg of salt

and dropped 6 times from a height of 1.8 meters. The results are provided in Table 8 below.

Table 8 - Experimental Results

| | **Comparative Example 1** | **Example 1** |
|---|---|---|
| **Sealant Film tests** | | |
| Dart drop impact strength of sealant PE film (grams) | 150 | 620 |
| Dart strength in gram per micron | 3.94 g/μ | 28.18 g/μ |
| **Laminate Test** | | |
| Dart drop impact strength of Laminates (grams) | 260 | 270 |
| **Pouch Test** | | |
| Pouch Drop test | Passes - 6 drops @ 1.8m height | Passes - 6 drops @ 1.8m height |

As shown in Table 8, the Example 1 sealant film exhibits significant dart strength improvement over the Comparative Example 1 sealant film. For example, the Dart weight to achieve failure in Example 1 was over 4 times the weight of Comparative Example 1. Moreover, the dart strength in grams per microns was over 600% higher than the Comparative Example 1 sealant film. This is especially significant considering the Comparative Example 1 sealant film has a thickness of 38 μm, which is significantly thicker than the Example 1 sealant film, which has a thickness of 22 μm.

For the laminate tests and pouch drop tests, the performance of Example 1 was comparable to the performance of Comparative Example 1, thus providing the properties desired by flexible packaging manufacturers at a significantly reduced overall laminate thickness. Like Comparative Example 1, conventional flexible salt packaging used in India include laminates with thicknesses greater than 50 μm. Prior to the discovery of the present laminates, which may have thicknesses below 50 μm, it was not considered possible to pack salt at lower thicknesses.

It will be apparent in combination with the claims and drawings that use of the singular also includes the possibility of the plural. For example, reference to an oil barrier layer also implicitly includes reference to at least one oil barrier layer.

## Claims

1. A laminate structure comprising:

    a print film comprising ethylene-based polymer;
    a sealant film laminated to the print film, the sealant film comprising at least 3 layers and having an overall thickness from 15 to 30 μm, where the sealant film comprises a middle layer, an outer layer, and an inner layer disposed between the print film and the middle layer, wherein

        the inner layer comprises an ethylene interpolymer having a density from 0.900 to 0.925 g/cc and a melt index ($I_2$) from 0.5 to 5 g/10 min, wherein $I_2$ is measured according to ASTM D1238 at 190°C and 2.16 kg load; and
        at least one of the inner layer, the middle layer, and the outer layer comprise a first composition comprising at least one ethylene based polymer, wherein the first composition comprises a Molecular Weighted Comonomer Distribution Index (MWCDI) value greater than 0.9, and a melt index ratio ($I_{10}/I_2$) that meets the following equation: $I_{10}/I_2 \geq 7.0 - 1.2 \times \log(I_2)$.

2. The laminate structure of claim 1, wherein the middle layer and the outer layer each comprise the first composition.

3. The laminate structure of any preceding claim, wherein the inner layer comprises at least 50% by weight of the ethylene interpolymer.

4. The laminate structure of any preceding claim, wherein the inner layer further comprises low density polyethylene (LDPE) having a density from 0.915 to 0.930 g/cc, melt index ($I_2$) from 0.5 to 5 g/10 min, and a Molecular Weight Distribution (MWD) from 3 to 10, wherein the MWD is defined as $M_w/M_n$, wherein $M_w$ is a weight average molecular

weight and $M_n$ is a number average molecular weight as measured by Gel Permeation Chromatography (GPC).

**5.** The laminate structure of any preceding claim, wherein the inner layer comprises from 60 to 90 % by weight of the ethylene interpolymer, and from 10 to 40 % by weight of the LDPE.

**6.** The laminate structure of any preceding claim, wherein the first composition has a MWCDI value less than, or equal to, 10.0.

**7.** The laminate structure of any preceding claim, wherein the first composition has a Zero-Shear Viscosity Ratio (ZSVR) value from 1.2 to 3.0.

**8.** The laminate structure of any preceding claim, wherein the first composition has a melt index ratio $I_{10}/I_2$ less than, or equal to, 9.2.

**9.** The laminate structure of any preceding claim, wherein the first composition has a vinyl unsaturation level greater than 10 vinyls per 1,000,000 total carbons.

**10.** The laminate structure of any preceding claim, wherein the print film comprises at least 3 layers, where the print film comprises a middle layer, an outer layer, and an inner layer disposed adjacent the inner layer of the sealant film, wherein

the middle layer comprises at least 90% by weight high density polyethylene (HDPE) having a density from 0.950 to 0.965 g/cc and a melt index ($I_2$) from 0.1 to 20 g/10 min, wherein $I_2$ is measured according to ASTM D1238 at 190°C and 2.16 kg load; and
the inner layer, the outer layer, or both comprises linear low density polyethylene (LLDPE) having a density from 0.925 to 0.965 g/cc and a melt index ($I_2$) from 0.1 to 20 g/10 min.

**11.** The laminate structure of claim 10, wherein the middle layer of the print film comprises 100% by wt. HDPE.

**12.** The laminate structure of claims 10 or 11, wherein the inner layer, the outer layer, or both of the print film further comprise low density polyethylene (LDPE) having an MWD from 3 to 10 and a melt index ($I_2$) from 0.5 to 5 g/10 min, wherein the MWD is defined as Mw/Mn, wherein Mw is weight average molecular weight and Mn is number average molecular weight.

**13.** The laminate structure of any of claims 10-12, wherein the inner layer, the outer layer, or both of the print film comprises at least 50 wt.% LLDPE, wherein the density of the LLDPE in the inner layer, the outer layer, or both of the print film is from 0.930 to 0.940 g/cc and the melt index ($I_2$) from 0.5 to 1.5 g/10 min.

**14.** The laminate structure of any preceding claim, wherein the laminate structure has an overall thickness less than 50 $\mu$m.

**15.** An article comprising the laminate structure of any preceding claim, wherein the article is a flexible packaging material.

## Patentansprüche

**1.** Eine Laminatstruktur, die Folgendes beinhaltet:

eine Druckträgerfolie, beinhaltend Polymer auf Ethylenbasis;
eine auf die Druckträgerfolie laminierte Siegelfolie, wobei die Siegelfolie mindestens 3 Schichten beinhaltet und eine Gesamtdicke von 15 bis 30 $\mu$m aufweist, wobei die Siegelfolie eine mittlere Schicht, eine äußere Schicht und eine zwischen der Druckträgerfolie und der mittleren Schicht angeordnete innere Schicht beinhaltet, wobei

die innere Schicht ein Ethylenmischpolymer mit einer Dichte von 0,900 bis 0,925 g/cm$^3$ und einem Schmelzindex ($I_2$) von 0,5 bis 5 g/10 min beinhaltet, wobei $I_2$ gemäß ASTM D1238 bei 190 °C und 2,16 kg Belastung gemessen wird; und mindestens eine von der inneren Schicht, der mittleren Schicht und der äußeren Schicht eine erste Zusammensetzung beinhaltet, die mindestens ein Polymer auf Ethylenbasis beinhaltet, wobei die erste Zusammensetzung einen MWCDI-Wert (MWCDI = Molecular Weighted Comonomer Distribution Index;
Comonomerverteilungsindex nach Molekulargewicht) von größer als 0,9 und ein Schmelzindexverhältnis ($I_{10}/I_2$), das die folgende Gleichung erfüllt, beinhaltet:

$$I_{10}/I_2 \geq 7{,}0 - 1{,}2 \times \log(I_2).$$

2. Laminatstruktur gemäß Anspruch 1, wobei die mittlere Schicht und die äußere Schicht jeweils die erste Zusammensetzung beinhalten.

3. Laminatstruktur gemäß einem der vorhergehenden Ansprüche, wobei die innere Schicht zu mindestens 50 Gewichts-% das Ethylenmischpolymer beinhaltet.

4. Laminatstruktur gemäß einem der vorhergehenden Ansprüche, wobei die innere Schicht ferner Polyethylen niederer Dichte (LDPE) mit einer Dichte von 0,915 bis 0,930 g/cm$^3$, einem Schmelzindex ($I_2$) von 0,5 bis 5 g/10 min und einer Molekulargewichtsverteilung (MWD) von 3 bis 10 beinhaltet, wobei die MWD als $M_w/M_n$ definiert ist, wobei $M_w$ ein gewichtsmittleres Molekulargewicht ist und $M_n$ ein zahlenmittleres Molekulargewicht ist, wie gemessen mittels Gelpermeationschromatographie (GPC).

5. Laminatstruktur gemäß einem der vorhergehenden Ansprüche, wobei die innere Schicht zu 60 bis 90 Gewichts-% das Ethylenmischpolymer und zu 10 bis 40 Gewichts-% das LDPE beinhaltet.

6. Laminatstruktur gemäß einem der vorhergehenden Ansprüche, wobei die erste Zusammensetzung einen MWCDI-Wert von kleiner als oder gleich 10,0 aufweist.

7. Laminatstruktur gemäß einem der vorhergehenden Ansprüche, wobei die erste Zusammensetzung einen ZSVR-Wert (ZSVR = Zero-Shear Viscosity Ratio; Nullscherviskositätsverhältnis) von 1,2 bis 3,0 aufweist.

8. Laminatstruktur gemäß einem der vorhergehenden Ansprüche, wobei die erste Zusammensetzung ein Schmelzindexverhältnis $I_{10}/I_2$ von kleiner als oder gleich 9,2 aufweist.

9. Laminatstruktur gemäß einem der vorhergehenden Ansprüche, wobei die erste Zusammensetzung einen Vinyl-Ungesättigtheitsgrad von größer als 10 Vinylen pro 1 000 000 Gesamtkohlenstoffen aufweist.

10. Laminatstruktur gemäß einem der vorhergehenden Ansprüche, wobei die Druckträgerfolie mindestens 3 Schichten beinhaltet, wobei die Druckträgerfolie eine mittlere Schicht, eine äußere Schicht und eine an die innere Schicht der Siegelfolie angrenzend angeordnete innere Schicht beinhaltet, wobei

    die mittlere Schicht zu mindestens 90 Gewichts-% Polyethylen hoher Dichte (HDPE) mit einer Dichte von 0,950 bis 0,965 g/cm$^3$ und einem Schmelzindex ($I_2$) von 0,1 bis 20 g/10 min beinhaltet, wobei $I_2$ gemäß ASTM D1238 bei 190 °C und 2,16 kg Belastung gemessen wird; und
    die innere Schicht, die äußere Schicht oder beide lineares Polyethylen niederer Dichte (LLDPE) mit einer Dichte von 0,925 bis 0,965 g/cm$^3$ und einem Schmelzindex ($I_2$) von 0,1 bis 20 g/10 min beinhalten.

11. Laminatstruktur gemäß Anspruch 10, wobei die mittlere Schicht der Druckträgerfolie zu 100 Gew.-% HDPE beinhaltet.

12. Laminatstruktur gemäß den Ansprüchen 10 oder 11, wobei die innere Schicht der Druckträgerfolie, die äußere Schicht der Druckträgerfolie oder beide ferner Polyethylen niederer Dichte (LDPE) mit einer MWD von 3 bis 10 und einem Schmelzindex ($I_2$) von 0,5 bis 5 g/10 min beinhalten, wobei die MWD als Mw/Mn definiert ist, wobei Mw das gewichtsmittlere Molekulargewicht ist und Mn das zahlenmittlere Molekulargewicht ist.

13. Laminatstruktur gemäß einem der Ansprüche 10-12, wobei die innere Schicht der Druckträgerfolie, die äußere Schicht der Druckträgerfolie oder beide mindestens 50 Gew.-% LLDPE beinhalten, wobei die Dichte des LLDPE in der inneren Schicht der Druckträgerfolie, der äußeren Schicht der Druckträgerfolie oder beiden 0,930 bis 0,940 g/cm$^3$ und der Schmelzindex ($I_2$) 0,5 bis 1,5 g/10 min betragen.

14. Laminatstruktur gemäß einem der vorhergehenden Ansprüche, wobei die Laminatstruktur eine Gesamtdicke von

weniger als 50 μm aufweist.

**15.** Ein Artikel, der die Laminatstruktur gemäß einem der vorhergehenden Ansprüche beinhaltet, wobei der Artikel ein flexibles Verpackungsmaterial ist.

**Revendications**

**1.** Une structure de stratifié comprenant :

un film d'impression comprenant un polymère à base d'éthylène ;
un film d'étanchéité stratifié sur le film d'impression, le film d'étanchéité comprenant au moins 3 couches et ayant une épaisseur globale allant de 15 à 30 μm, où le film d'étanchéité comprend une couche de milieu, une couche externe, et une couche interne disposée entre le film d'impression et la couche de milieu, dans laquelle

la couche interne comprend un interpolymère d'éthylène ayant une masse volumique allant de 0,900 à 0,925 g/cm$^3$ et une indice de fluidité à chaud ($I_2$) allant de 0,5 à 5 g/10 min, $I_2$ étant mesuré selon l'ASTM D1238 à 190 °C et 2,16 kg de charge ; et
au moins une couche parmi la couche interne, la couche de milieu, et la couche externe comprend une première composition comprenant au moins un polymère à base d'éthylène, la première composition comprenant une valeur d'indice de distribution des comonomères en poids moléculaire (MWCDI) supérieure à 0,9, et un rapport d'indice de fluidité à chaud ($I_{10}/I_2$) qui répond à l'équation suivante :

$$I_{10}/I_2 \geq 7,0 - 1,2 \times \log (I_2).$$

**2.** La structure de stratifié de la revendication 1, dans laquelle la couche de milieu et la couche externe comprennent chacune la première composition.

**3.** La structure de stratifié de n'importe quelle revendication précédente, dans laquelle la couche interne comprend au moins 50 % en poids de l'interpolymère d'éthylène.

**4.** La structure de stratifié de n'importe quelle revendication précédente, dans laquelle la couche interne comprend en outre un polyéthylène basse densité (LDPE) ayant une masse volumique allant de 0,915 à 0,930 g/cm$^3$, un indice de fluidité à chaud ($I_2$) allant de 0,5 à 5g/10 min, et une distribution des masses moléculaires (MWD) allant de 3 à 10, la MWD étant définie comme étant $M_w/M_n$, $M_w$ étant une masse moléculaire moyenne en poids et $M_n$ étant une masse moléculaire moyenne en nombre telles que mesurées par chromatographie par perméation sur gel (GPC).

**5.** La structure de stratifié de n'importe quelle revendication précédente, dans laquelle la couche interne comprend de 60 à 90 % en poids de l'interpolymère d'éthylène, et de 10 à 40 % en poids du LDPE.

**6.** La structure de stratifié de n'importe quelle revendication précédente, dans laquelle la première composition a une valeur de MWCDI inférieure, ou égale, à 10,0.

**7.** La structure de stratifié de n'importe quelle revendication précédente, dans laquelle la première composition a une valeur de rapport de viscosité à cisaillement nul (ZSVR) allant de 1,2 à 3,0.

**8.** La structure de stratifié de n'importe quelle revendication précédente, dans laquelle la première composition a un rapport d'indice de fluidité à chaud $I_{10}/I_2$ inférieur, ou égal, à 9,2.

**9.** La structure de stratifié de n'importe quelle revendication précédente, dans laquelle la première composition a un niveau d'insaturation vinylique supérieur à 10 vinyles pour 1 000 000 de carbones totaux.

**10.** La structure de stratifié de n'importe quelle revendication précédente, dans laquelle le film d'impression comprend au moins 3 couches, où le film d'impression comprend une couche de milieu, une couche externe, et une couche interne disposées de manière adjacente à la couche interne du film d'étanchéité, dans laquelle

la couche de milieu comprend au moins 90 % en poids de polyéthylène haute densité (HDPE) ayant une masse

volumique allant de 0,950 à 0,965 g/cm$^3$ et un indice de fluidité à chaud ($I_2$) allant de 0,1 à 20 g/10 min, $I_2$ étant mesuré selon l'ASTM D1238 à 190 °C et 2,16 kg de charge ; et
la couche interne, la couche externe, ou les deux, comprend un polyéthylène basse densité linéaire (LLDPE) ayant une masse volumique allant de 0,925 à 0,965 g/cm$^3$ et un indice de fluidité à chaud ($I_2$) allant de 0,1 à 20 g/10 min.

**11.** La structure de stratifié de la revendication 10, dans laquelle la couche de milieu du film d'impression comprend 100 % en poids de HDPE.

**12.** La structure de stratifié des revendications 10 ou 11, dans laquelle la couche interne, la couche externe, ou les deux du film d'impression comprennent en outre un polyéthylène basse densité (LDPE) ayant une MWD allant de 3 à 10 et un indice de fluidité à chaud ($I_2$) allant de 0,5 à 5 g/10 min, la MWD étant définie comme étant Mw/Mn, Mw étant la masse moléculaire moyenne en poids et Mn étant la masse moléculaire moyenne en nombre.

**13.** La structure de stratifié de n'importe lesquelles des revendications 10 à 12, dans laquelle la couche interne, la couche externe, ou les deux, du film d'impression comprend au moins 50 % en poids de LLDPE, dans laquelle la masse volumique du LLDPE dans la couche interne, la couche externe, ou les deux, du film d'impression va de 0,930 à 0,940 g/cm$^3$ et l'indice de fluidité à chaud ($I_2$) va de 0,5 à 1,5 g/10 min.

**14.** La structure de stratifié de n'importe quelle revendication précédente, la structure de stratifié ayant une épaisseur globale inférieure à 50 μm.

**15.** Un article comprenant la structure de stratifié de n'importe quelle revendication précédente, l'article étant un matériau d'emballage souple.

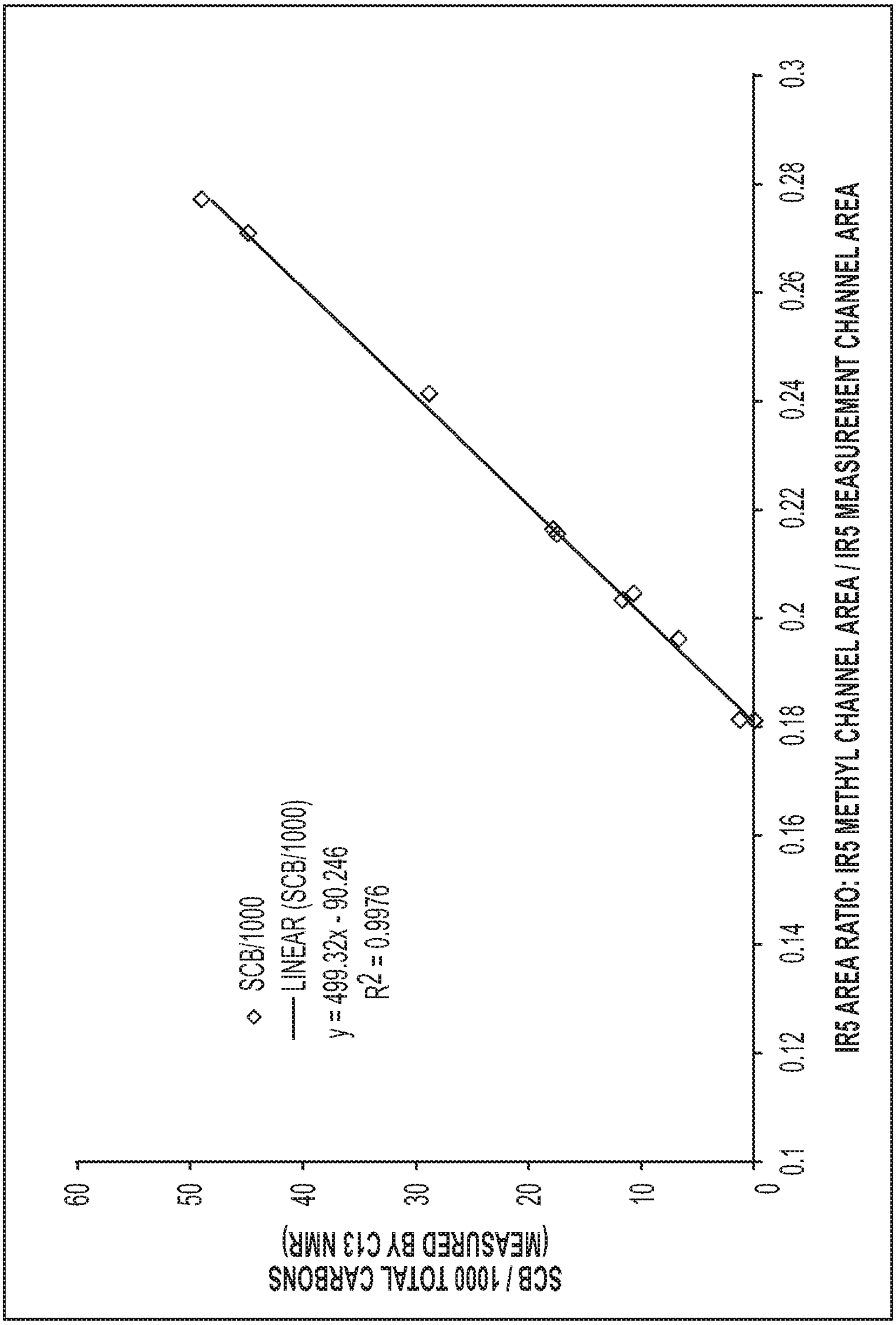
SCB / 1000 TOTAL CARBONS
(MEASURED BY C13 NMR)
0
10
20
30
40
50
60
0.1
0.12
0.14
0.16
0.18
0.2
0.22
0.24
0.26
0.28
0.3
IR5 AREA RATIO: IR5 METHYL CHANNEL AREA / IR5 MEASUREMENT CHANNEL AREA
SCB/1000
LINEAR (SCB/1000)
y = 499.32x - 90.246
$R^2$ = 0.9976

FIG. 1

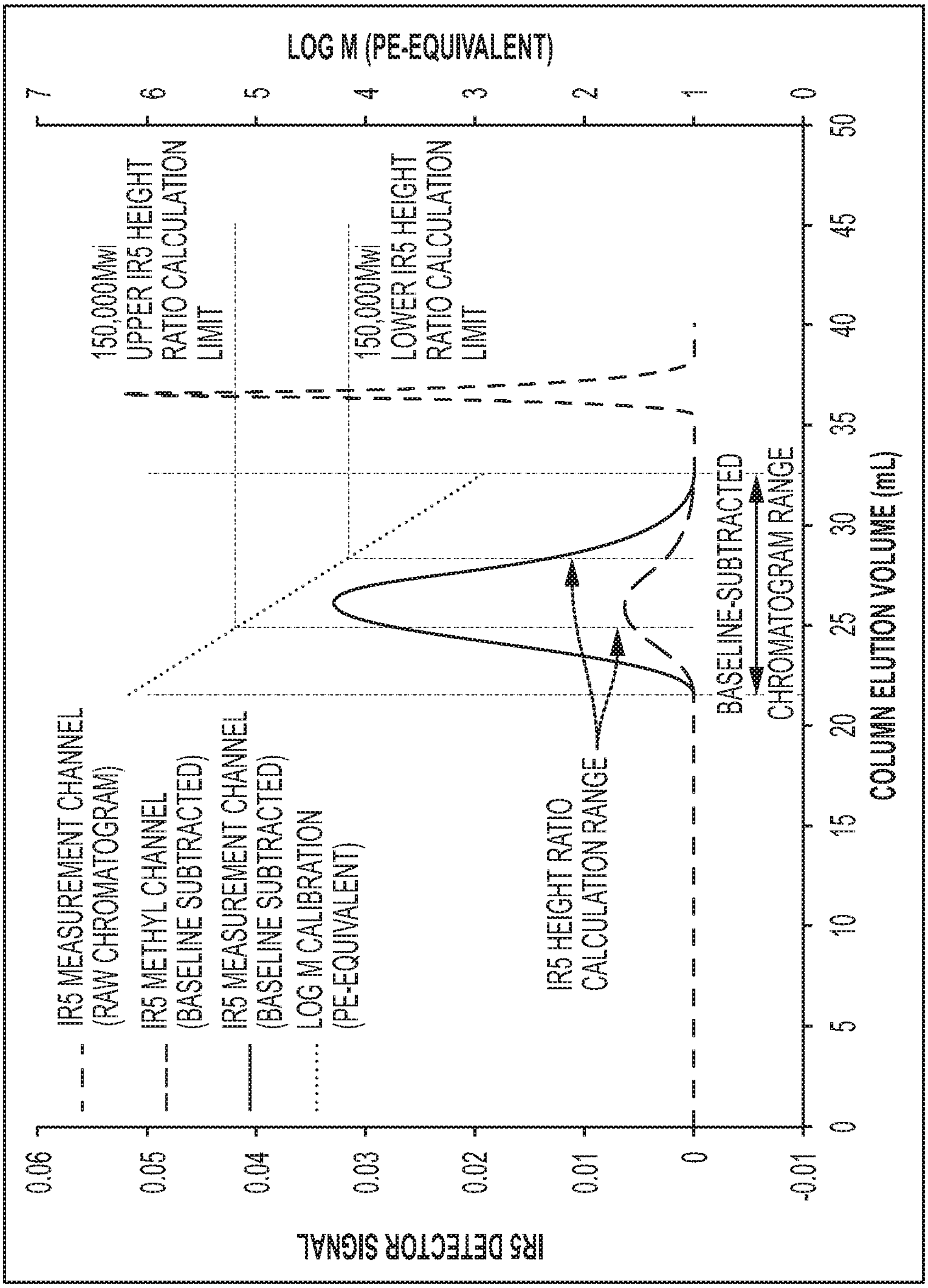

LOG M (PE-EQUIVALENT)
IR5 DETECTOR SIGNAL
COLUMN ELUTION VOLUME (mL)
IR5 MEASUREMENT CHANNEL (RAW CHROMATOGRAM)
IR5 METHYL CHANNEL (BASELINE SUBTRACTED)
IR5 MEASUREMENT CHANNEL (BASELINE SUBTRACTED)
LOG M CALIBRATION (PE-EQUIVALENT)
150,000Mwi UPPER IR5 HEIGHT RATIO CALCULATION LIMIT
150,000Mwi LOWER IR5 HEIGHT RATIO CALCULATION LIMIT
IR5 HEIGHT RATIO CALCULATION RANGE
BASELINE-SUBTRACTED CHROMATOGRAM RANGE
0.06
0.05
0.04
0.03
0.02
0.01
0
-0.01
0
5
10
15
20
25
30
35
40
45
50
7
6
5
4
3
2
1
0


FIG. 2

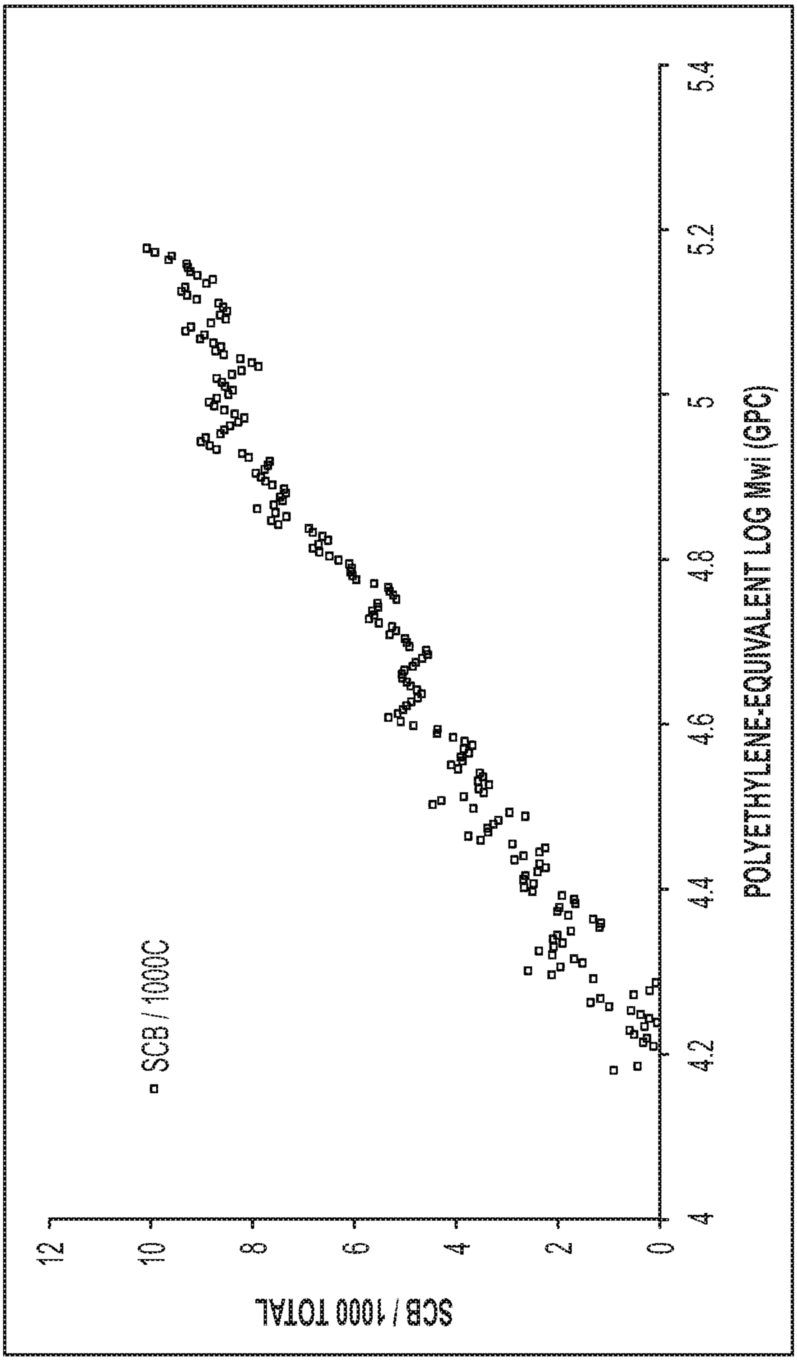
SCB / 1000C
SCB / 1000 TOTAL
0
2
4
6
8
10
12
4
4.2
4.4
4.6
4.8
5
5.2
5.4
POLYETHYLENE-EQUIVALENT LOG Mwi (GPC)

FIG. 3

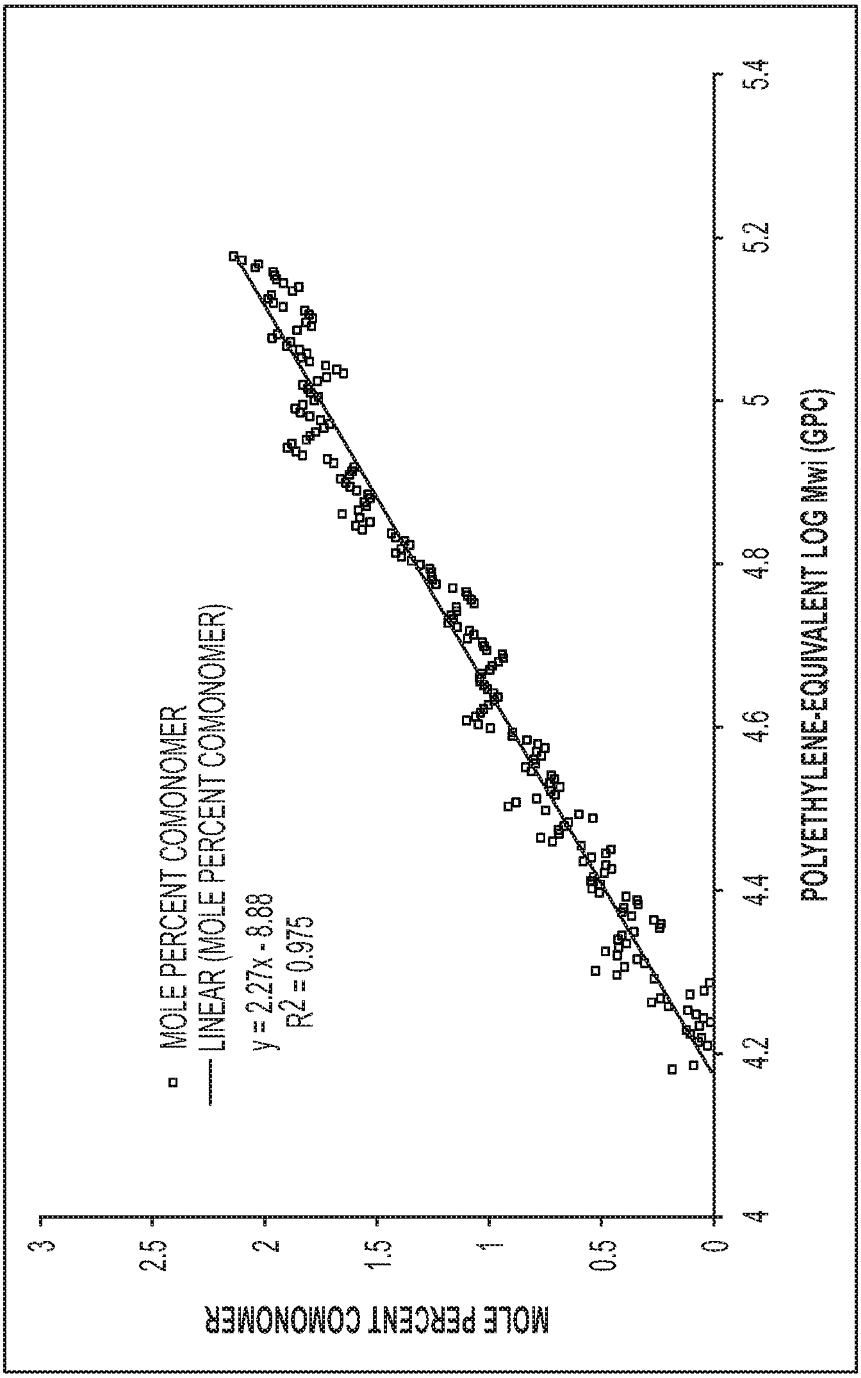
MOLE PERCENT COMONOMER
LINEAR (MOLE PERCENT COMONOMER)
y = 2.27x - 8.88
R2 = 0.975
MOLE PERCENT COMONOMER
0
0.5
1
1.5
2
2.5
3
POLYETHYLENE-EQUIVALENT LOG Mwi (GPC)
4
4.2
4.4
4.6
4.8
5
5.2
5.4

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- IN 201741023065
- US 2015259586 A1
- US 4612300 A
- US 4314912 A
- US 4547475 A
- US 6103657 A
- US 5064802 A
- US 5153157 A
- US 5296433 A
- US 5321106 A
- US 5350723 A
- US 5425872 A
- US 5625087 A
- US 5721185 A
- US 5783512 A
- US 5883204 A
- US 5919983 A
- US 6696379 B
- US 7163907 B
- US 6515155 B1
- US 5977251 A


### Non-patent literature cited in the description


- **WILLIAMS ; WARD.** Polym. Letters. *J. Polym. Sci.,* 1968, vol. 6, 621
- **KARJALA et al.** Detection of Low Levels of Long-chain Branching in Polyolefins. *Annual Technical Conference - Society of Plastics Engineers,* 2008, 887-891
- **BUSICO, V. et al.** *Macromolecules,* 2005, vol. 38, 6988
- **J. C. RANDALL et al.** NMR and Macromolecules. *ACS Symposium series 247*
- Am. Chem. Soc. 1984
- **J. C. RANDALL.** Polymer Sequence Determination. Academic Press, 1977
- **WILLIAMS ; WARD.** Polym. Let. *J. Polym. Sci.,* 1968, vol. 6, 621